(19) Europäisches Patentamt

European Patent Office

Office européen des brevets

(11) **EP 4 564 694 A1**

(12) **EUROPEAN PATENT APPLICATION**

(43) Date of publication:
04.06.2025 Bulletin 2025/23

(21) Application number: 23213804.0

(22) Date of filing: 01.12.2023

(51) International Patent Classification (IPC):
**H04B 7/06** (2006.01)

(52) Cooperative Patent Classification (CPC):
**H04B 7/063; H04B 7/0632;** H04B 7/0639;
H04B 7/0658

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
- **Suarez Rivera, Luis Alberto**
  **81245 Munich (DE)**
- **Bonfante, Andrea**
  **75015 Paris (FR)**
- **Kovalchukov, Roman**
  **33720 Tampere (FI)**
- **Brozzu, Francesco**
  **92340 Bourg-la-Reine (FR)**

(74) Representative: **TBK**
**Bavariaring 4-6**
**80336 München (DE)**

(54) **FLEXIBLE CHANNEL STATE INFORMATION CONFIGURATION**

(57)    There are provided measures for flexible channel state information configuration. Such measures exemplarily comprise receiving, from a terminal, radio channel quality reporting configuration feedback information established based on at least one reference signal, generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and transmitting, towards said terminal, information indicative of said modified radio channel quality reporting configuration for said terminal.

```
                                                          ┌─ S51
┌──────────────────────────────────────────────────┐
│  receiving, from a terminal, radio channel quality │
│  reporting configuration feedback information      │
│  established based on at least one reference signal │
└──────────────────────────────────────────────────┘
                         │
                         ▼                              ┌─ S52
┌──────────────────────────────────────────────────┐
│  generating a modified radio channel quality       │
│  reporting configuration for said terminal based   │
│  on an initial radio channel quality reporting     │
│  configuration for said terminal and said radio    │
│  channel quality reporting configuration feedback  │
│  information, said modified radio channel quality   │
│  reporting configuration for said terminal differing │
│  from said initial radio channel quality reporting  │
│  configuration for said terminal in at least one   │
│  reporting configuration parameter                 │
└──────────────────────────────────────────────────┘
                         │
                         ▼                              ┌─ S53
┌──────────────────────────────────────────────────┐
│  transmitting, towards said terminal, information  │
│  indicative of said modified radio channel quality │
│  reporting configuration for said terminal         │
└──────────────────────────────────────────────────┘
```

Fig. 5

EP 4 564 694 A1

## Description

Field

Various example embodiments relate to flexible channel state information configuration. More specifically, various example embodiments exemplarily relate to measures (including methods, apparatuses and computer program products) for realizing flexible channel state information configuration.

Background

The present specification generally relates to CSI reconfigurability, CSI bit overhead, CSI for high speed, and time Domain channel properties (TDCP).

Latest related Rel 18 CSI enhancements brought two new types of codebooks extensions. One is the CJT case, which is an extension of legacy Rel 16 for multiple TRPs which still uses space-frequency compression; and the Doppler codebook extension, which uses prediction and time-to-Doppler domain compression (on the top of space-frequency compression) for tackling the CSI aging problem at higher speeds.

In the following, it is explained how the CSI is compressed using as reference the 3GPP Type II codebook, which has been further enhanced from Rel 15 up to current Rel 18. For this description, it is focused on the space-frequency CSI compression process.

The channel can be represented by an explicit channel tensor defined in three dimensions: the space component represented by $NTx$ antenna ports in the gNB; the frequency component which is defined by a bandwidth composed by a number of Physical resource blocks (PRB); and lastly all of the $NRx$ receiver antennas in the UE with their respective space-frequency measurements. In reality, in current 3GPP standards, the channel is not explicitly reported but the associated precoding matrices required for the corresponding space-frequency beamforming is what UE actually provides to the network in the CSI report.

The CSI obtained from the precoding matrices is initially obtained from singular value decomposition (SVD) or Eigenvalue decomposition (EVD) applied on the channel or associated channel correlation matrices.

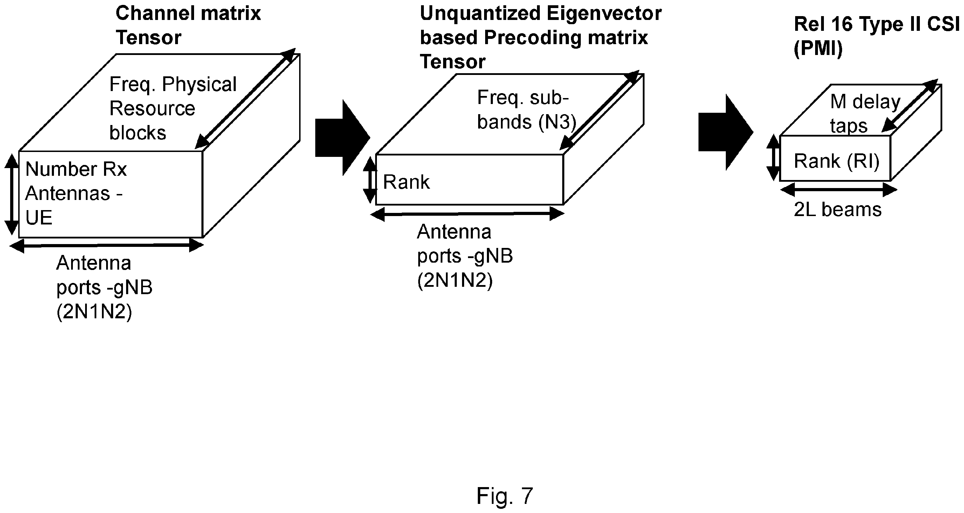

FIG. 7 schematically illustrates channel representations, and in particular illustrates the space-frequency channel/precoding matrix tensor set and the resulting CSI (PMI) compression after transformation into beam-delay domain with a chosen transmission rank.

As illustrated in FIG. 7, the precoding matrices also count with the similar tensor structure, however defined in a different way, as they are defined by transmission streams to the UE with a chosen rank.

For space, there is a total of $Ncsi= 2N1N2$ CSI ports which depend on the CSI-RS precoding configuration: $Ncsi \leq NTx$.

$N1$ and $N2$ represents the number of CSI ports columns and rows which define the horizontal and vertical domains of the 2D CSI antenna port structure, as well as the coefficient "2", because two antenna polarizations are considered (typically for MIMO arrays $\pm 45°$ slant); $N3$ (also sometimes noted as $Nsb$) represents a number of sub-bands in frequency composed by a number of averaged PRBs in each.

Each sub-band has an associated spatial precoding vector with size $2N1N2$ for each rank layer.

After compression, as shown in FIG. 7, it can be observed that the resulting CSI report is composed by a smaller structure with a set of coefficients defined by $2L$ beam projections and $M$ delay taps for each beam projection in each rank layer.

The new CSI structure represented in Beam-Time delay domain exploits the sparse characteristics of the channel/precoding matrix after the corresponding transformations with the respective codebooks for each domain.

The codebooks used allow decomposing the raw CSI information obtained from the Eigenvector-based precoding matrices into a reduced set of Fourier projections, and then determining the main components in beam and delay domains.

The set of projection coefficients in a quantized form, any related reference CSI values, and indexes of selected components coming from one or more reference codebooks, are globally called precoding matrix indicators (PMI).

The CSI does not only contain the PMI information but also: the information of the precoding matrix attainable rank in the form of a rank indicator (RI); a set of one or more channel quality indicators (CQI) is also reported to provide information about the quality of the transmission channel for the respective UE, which is based on the estimation of the signal-to-noise ratio (SNR) on the effective (beamformed) channel.

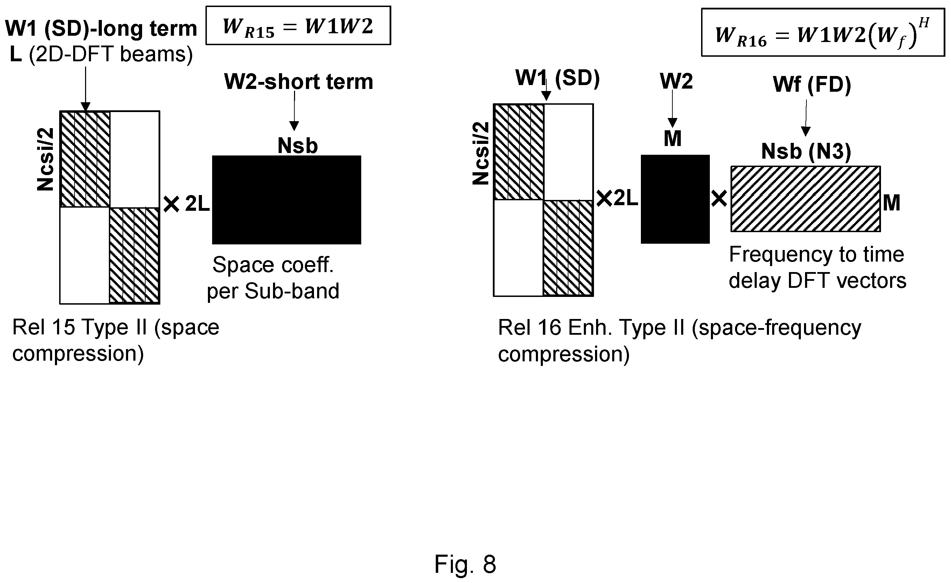

FIG. 8 schematically illustrates codebook structures, and in particular illustrates the structure of Rel 15/16 Type II codebooks.

In FIG. 8, the structure of the Rel 15 Type II and Rel 16 enhanced Type II codebook is shown, and it is illustrated how the PMI calculations are carried out. Due to the larger CSI accuracy of Type II, it is usually employed for MU-MIMO applications, as having a more reliable CSI is very useful for interference cancellation during scheduling.

A big difference between the Rel 15 and 16 Type II is that Rel 15 Type II only has the capability of space compression in $2L$ beam projections for all averaged subbands, whereas Rel 16 enhanced Type II codebook includes the frequency compression, and the CSI representation could be further reduced to a smaller number of delay taps for each rank layer.

The beam compression is performed by selecting a number of common $L$ DFT wideband beams for both polarizations and all rank layers, represented by a matrix $W1$. The matrix $W1$ has a block diagonal structure with size $2(N1N2 \times L)$ complex coefficients obtained from a larger 2D-DFT oversampled codebook with oversampling coefficients $O1$ and $O2$.

The unquantized Eigenvector-based precoding matrices is to be presented in a set of beam projections coefficients $W2$.

For Rel 15 Type II, the size of $W2$ corresponds to $2L \times Nsb$ complex coefficients. The full expression which represents the linear combination approximation for the precoding matrices of the Rel. 15 Type II (i.e. $W_{R15}$) is given by $W_{R15} = W1 W2$ for each rank layer.

On the other hand, for Rel 16 enhanced Type II, the frequency information of the number of subbands can be further represented in a reduced number of taps by a multiplication by a second frequency codebook, in which the reduced number of $M$ taps is represented by $W_f$ with size $N3 \times M$, which contains the selected DFT codewords after the frequency transform.

The space-frequency linear combination approximation for the precoding matrices of the Rel. 16 enhanced Type II (i.e. $W_{R16}$) is given by $W_{R16} = W1 W2 (W_f)^H$, where $(\cdot)^H$ represents the Hermitian of a matrix (i.e. transpose-conjugate of a complex matrix).

The major advantage of the space-frequency compression is the further reduced number of coefficients with respect to the space only compression from Rel 15 Type II. This allows several advantages for Rel 16 enhanced Type II over Rel 15 Type II: Firstly, due to bit overhead constraints, Rel 15 Type II has a very rough quantization based on firstly, a quantization of wideband coefficients and then, 1-bit quantization for amplitude of each subband. In that aspect, Rel 16 enhanced Type II, thanks to having less reported coefficients, can afford a better quantization of amplitude and phase of beam-delay coefficients. Secondly, despite of having a rough quantization, Rel 15 Type II has anyway a large bit overhead budget and may only report up to rank 2. In contrast, Rel 16 enhanced Type II can report up to rank 4 supported on the sparsity of the coefficients which gives as a result a quite moderate overall bit overhead.

On the other hand, the Rel 15 Type I precoder has a simpler design but less CSI accuracy, and it is typically used for SU-MIMO applications, in which interference is a less critical issue.

The concept of Rel 15 Type I precoder is an extension of the legacy LTE codebooks, in which a single DFT beam with fixed amplitude and a cross-polarization coefficient (also called co-phasing between the 2 polarizations) are enough to represent the PMI.

Similarly to Type II, the codebook for space may have a 2D configuration with $N1$ and $N2$ values. Moreover, there are two modes, namely mode 1 and mode 2. In mode 1, only one beam can be used, i.e. L=1, for the whole frequency band. On the other hand, in mode 2, a set of L=4 beams is selected, coming from a same group and the beam selection per subband can be done by selecting only one of those L=4 beams.

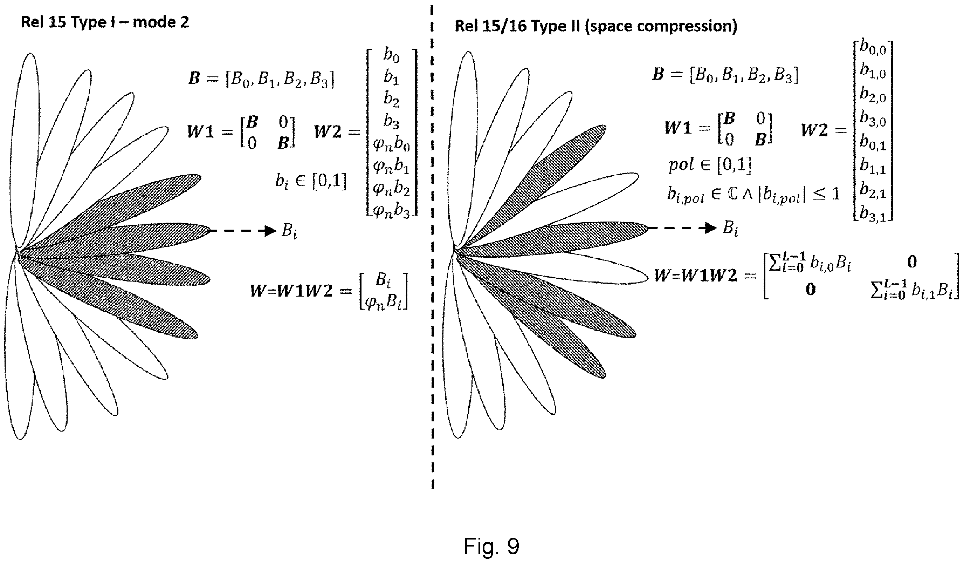

FIG. 9 schematically illustrates beam selection mechanisms, and in particular illustrates a comparison of the beam selection mechanisms of Rel 15 Type I and Rel 15/16 Type II.

In FIG. 9, the beam selection mechanisms of the Type I and Type II codebooks are compared.

On the left side, for Rel 15 Type I mode 2, it can be observed that the precoder $W$ is composed by a single beam $B_i$ out of a set $B$, which corresponds to the long term component $W1$. In this case, $W2$, which is the short term component, acts as selector to pick the same $B_i$ for both polarizations with a QPSK co-phasing coefficient given by $\varphi_n$. So it is clear that despite that $W1$ contains $L = 4$ beams for mode 2, just one beam is selected at a time for each $W = W1 W2$ associated to each subband.

On the other hand, for Rel 15/16 Type II, it can be noticed that there is also the structure $W = W1 W2$. However $W2$ in this case is composed by complex coefficients given by $b_{i,pol} \in \mathbb{C} \wedge |b_{i,pol}| \leq 1$. This gives as a result that the precoder $W = [W_{pol=0}, W_{pol=1}]^T$ is defined by linear combinations, in which each polarization of the precoder matrix is given as $W_{pol} = \sum_{i=0}^{L-1} b_{i,pol} B_i$ with $pol \in [0,1]$ and $L = 4$.

In this case, it can be easily understood that Type I and Type II, despite that at first glance may look as two different schemes, keep some CSI configuration parameters in common, but with different restrictions, and that mathematically in essence they are the same.

As a matter of fact, a major difference is the structure and quantization of $W1$ and $W2$. For instance, for Rel 15 Type I mode 2, the coefficients of $b_i \in [0,1]$, which is just a special case contained by the more general expression

$b_{i,pol} \in \mathbb{C} \wedge |b_{i,pol}| \le 1$, which allows more variable amplitude and phase values definition, thanks to a more granular quantization.

Moreover, for Rel 18 CSI enhancements, a new CSI quantity has been presented into the 3GPP industrial community.

This new CSI quantity is called Time Domain Channel Properties (TDCP) indicator, and its function is focused to provide the BS radio physical interface with new CSI information regarding the relative mobility of the UE and associated Doppler characteristics of the link with the serving BS. This indicator is useful for specific reconfiguration use cases, like CSI codebook type switching and reference signal reconfiguration (e.g., SRS).

The Doppler spectrum is defined as the Fourier transform of the time-correlation function of the channel. Let $h_n(k)$ be the TRS channel measured at subcarrier $n$, with $n = 0, \dots, N - 1$, and time $kT_s$, where $T_s$ is the time interval between two consecutive TRS measurement occasions. Under the assumption that a UE takes $B$ such TRS measurements at time $k_0T_s$, $(k_0 + 1)T_s$, $\dots$, $(k_0 + B - 1)T_s$, the normalized wideband time-correlation function at lag $lT_s$, averaged over the $N$ subcarriers, is given by $A(l)$ and described by Eq 1 and Eq 2.

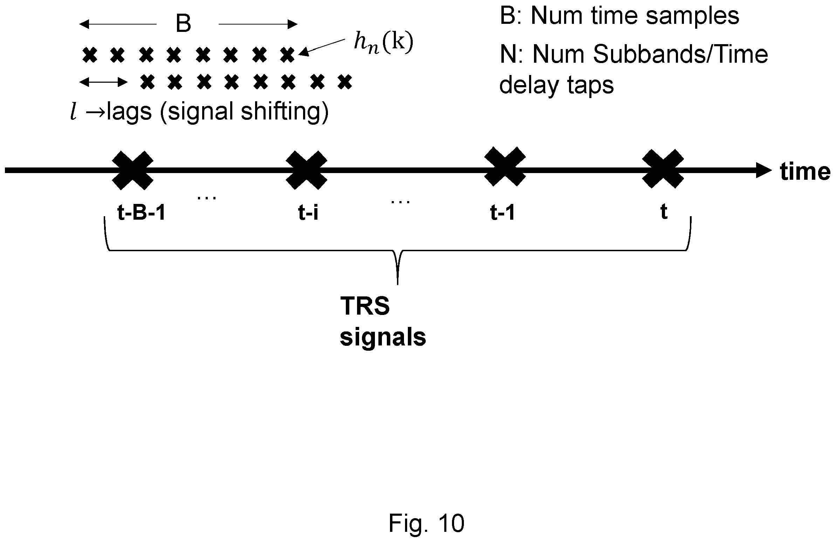

FIG. 10 schematically illustrates a time correlation calculation for TDCP, and in particular illustrates this calculation process.

$$A(l) = \frac{c(l)}{c(0)} \qquad \text{Eq. 1}$$

$$c(l) = \frac{1}{N} \sum_{n=0}^{N-1} \frac{1}{B-l} \sum_{k=k_0}^{k_0+B-1-l} h_n(k+l)h_n^*(k), \qquad l = 0, \dots, B-1 \qquad \text{Eq. 2}$$

Regarding the number of lags and related coefficients, it has been defined that:

1) The number of lags $Y = 1$ was chosen as a default feature with delay$\le$ Dbasic symbols, only wideband quantized normalized amplitude is reported.
2) The optional feature, $Y = 1$ with delay> Dbasic symbols and $Y \ge 1$, wideband quantized normalized amplitude and (optionally) phase for each delay are reported.

Currently, the TDCP values can calculate one or more time correlation values. For instance, for the codebook switching between Type I/Type II codebook, just one single coefficient is needed to determine if the TDCP is above or below a threshold. This makes the switching between the two codebooks possible. In the use case of switching between Type-I and Type-II codebooks: a) for $Y = 1$ and 1ms delay optimal threshold is equal to 0.992; b) for Y=1 and 5ms delay optimal threshold is equal to 0.98; c) for $Y = 1$ and 20ms delay optimal threshold is equal to 0.92; d) for $Y = 2$ and 1ms delay optimal threshold is equal to 0.995.

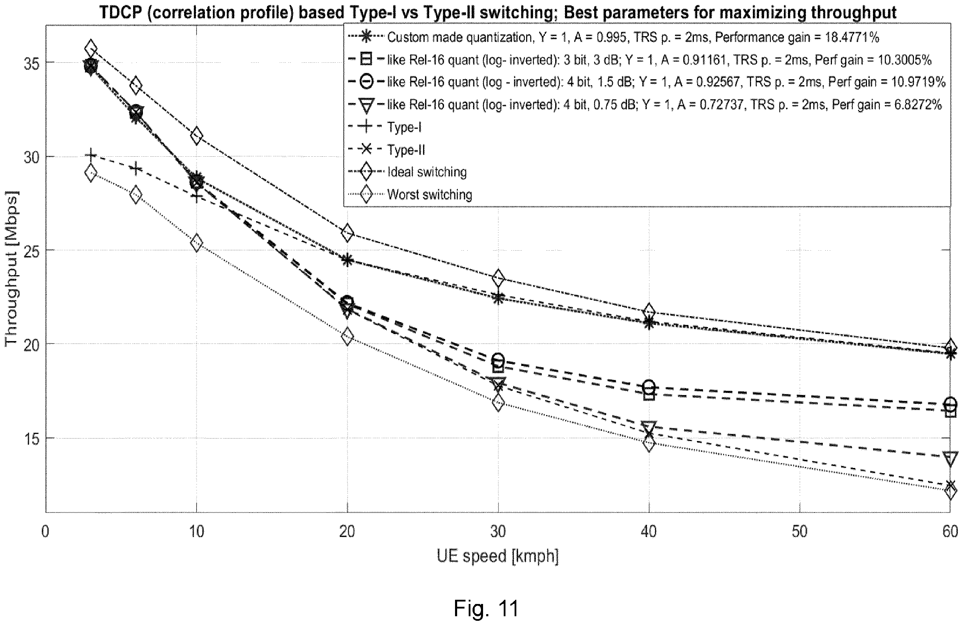

As quantization scheme is degraded, that can lead to up to 12% performance drop in terms of average throughput. An example with a link level simulation of the Type-I/Type II codebook switching with TDCP based thresholds is provided in FIG. 11, in which different quantization schemes are used.

FIG. 11 is a diagram comparing outcomes of codebook switching with different TDCP configuration schemes, and in particular illustrates an example of Type I/Type II codebook switching with different TDCP quantization schemes.

Currently, for a reconfigurable CSI, it is relied on codebook switching or the reconfiguration of a single CSI parameter (for instance, CSI-RS periodicity). Although the introduction of TDCP is an important step forward, this is not enough, and the CSI feedback process could be further improved by a more holistic vision of a generalized CSI codebook reconfiguration, which includes all the different characteristics and parameters associated to the CSI.

As mentioned before, although information obtained from TDCP is useful for decision-making, this should not be working isolated of other pieces of CSI, for instance the Precoding Matrix Indicator (PMI), the Rank Indicator (RI) and the Channel quality indicators (CQI). This latter is important for optimizing the performance of the overall CSI feedback process.

It is, for instance, the following observed upon simulation for different UE mobility configurations regarding the functioning of the Type I and Type II codebooks:

- A higher number of beams at higher speed may not provide better performance. This may be deduced by simply understanding that the structure of Type I contains 1 beam per sub-band while, Type II, has 4 beams per subband. From a linear combination point of view, only the most dominant beams are reliable in the high mobility situation.
- Likewise, subband granularity at higher speed also may not provide a substantial better performance as frequency selectivity becomes quite unreliable. Wideband CSI might yield nearly same performance with significant bit overhead reduction.

- CSI information located in different rank layers degrades faster for the highest rank layers. Thus, the reported RI cannot be fully reliable as the CSI degrades in time for the highest ranks, misleading the BS about the possibility for the UE to support high rank transmission.
- Moreover, granular quantization of coefficients becomes less reliable if only high amplitude space-frequency tap components are the only robust information under CSI aging. This could also lead to require switching OFF frequency compression and adjust the quantization scheme and number of subbands.
- The CSI aging can be compensated with CSI prediction. However, the CSI prediction is not totally always effective, as it requires certain fulfilled conditions to estimate the prediction coefficients used for channel CSI extrapolation. For instance, if the time of coherence of the channel is very narrow due to increased Doppler spread (i.e., at a higher speed), the CSI-RS periodicity should be reconfigured to have enough sampling rate to track the channel changes. The required CSI-RS periodicity could be estimated with TDCP, for example, which is a well known potential use of this functionality. Nonetheless, in case of not being able to setup the required reference signal periodicity (e.g. limitation of network resources) to respond to variability of channel, the CSI prediction can be deactivated and bit overhead reconfigured.

Moreover, the CSI characteristics above might have more than one state configuration, in contrast to a simple switching between two alternatives, e.g. ON/OFF. Thus, the number of beams, sub-bands, reported CSI coefficients, the maximum reportable rank value, the quantization characteristics, etc., may be set to a better operational point depending on mobility or channel quality conditions.

Hence, the problem arises that a more flexible and powerful configuration of CSI reporting is necessary.

Hence, there is a need to provide for flexible channel state information configuration.

<u>Summary</u>

Various example embodiments aim at addressing at least part of the above issues and/or problems and drawbacks.

Various aspects of example embodiments are set out in the appended claims.

According to an exemplary aspect, there is provided a method of an access network entity, the method comprising receiving, from a terminal, radio channel quality reporting configuration feedback information established based on at least one reference signal, generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and transmitting, towards said terminal, information indicative of said modified radio channel quality reporting configuration for said terminal.

According to an exemplary aspect, there is provided a method of a terminal, the method comprising transmitting, towards an access network entity, radio channel quality reporting configuration feedback information established based on at least one reference signal, receiving, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and determining said modified radio channel quality reporting configuration for said terminal based on said information indicative of said modified radio channel quality reporting configuration for said terminal.

According to an exemplary aspect, there is provided an apparatus of an access network entity, the apparatus comprising receiving circuitry configured to receive, from a terminal, radio channel quality reporting configuration feedback information established based on at least one reference signal, generating circuitry configured to generate a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and transmitting circuitry configured to transmit, towards said terminal, information indicative of said modified radio channel quality reporting configuration for said terminal.

According to an exemplary aspect, there is provided an apparatus of a terminal, the apparatus comprising transmitting circuitry configured to transmit, towards an access network entity, radio channel quality reporting configuration feedback information established based on at least one reference signal, receiving circuitry configured to receive, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and determining circuitry configured to determine said modified radio channel quality reporting configuration for said terminal based on said information indicative of said modified radio channel quality reporting configuration for said terminal.

According to an exemplary aspect, there is provided an apparatus of an access network entity, the apparatus comprising at least one processor, and at least one memory storing instructions that, when executed by the at least one processor, cause the apparatus at least to perform receiving, from a terminal, radio channel quality reporting configuration feedback information established based on at least one reference signal, generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and transmitting, towards said terminal, information indicative of said modified radio channel quality reporting configuration for said terminal.

According to an exemplary aspect, there is provided an apparatus of a terminal, the apparatus comprising at least one processor, and at least one memory storing instructions that, when executed by the at least one processor, cause the apparatus at least to perform transmitting, towards an access network entity, radio channel quality reporting configuration feedback information established based on at least one reference signal, receiving, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and determining said modified radio channel quality reporting configuration for said terminal based on said information indicative of said modified radio channel quality reporting configuration for said terminal.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient provision and utilization of a unified CSI feedback codebook based reporting process to thereby solve at least part of the problems and drawbacks identified in relation to the prior art.

By way of example embodiments, there is provided flexible channel state information configuration. More specifically, by way of example embodiments, there are provided measures and mechanisms for realizing flexible channel state information configuration.

Thus, improvement is achieved by methods, apparatuses and computer program products enabling/realizing flexible channel state information configuration.

Brief description of the drawings

In the following, the present disclosure will be described in greater detail by way of non-limiting examples with reference to the accompanying drawings, in which

FIG. 1 is a block diagram illustrating an apparatus according to example embodiments,

FIG. 2 is a block diagram illustrating an apparatus according to example embodiments,

FIG. 3 is a block diagram illustrating an apparatus according to example embodiments,

FIG. 4 is a block diagram illustrating an apparatus according to example embodiments,

FIG. 5 is a schematic diagram of a procedure according to example embodiments,

FIG. 6 is a schematic diagram of a procedure according to example embodiments,

FIG. 7 schematically illustrates channel representations,

FIG. 8 schematically illustrates codebook structures,

FIG. 9 schematically illustrates beam selection mechanisms,

FIG. 10 schematically illustrates a time correlation calculation for TDCP,

FIG. 11 is a diagram comparing outcomes of codebook switching with different TDCP schemes,

FIG. 12 is a schematic representation of a unified codebook according to example embodiments,

FIG. 13 is a schematic diagram of a procedure according to example embodiments,

FIG. 14 schematically illustrates a tree-structure codebook reconfiguration according to example embodiments,

FIG. 15 schematically illustrates a machine learning model based codebook reconfiguration according to example embodiments,

FIG. 16 schematically illustrates CSI aging for different channel layers,

FIG. 17 (FIG. 17a and FIG. 17b) shows diagrams illustrating CSI degradation,

FIG. 18a is a schematic diagram of a procedure according to example embodiments,

FIG. 18b is a schematic diagram of a procedure according to example embodiments,

FIG. 19 (FIG. 19a and FIG. 19b) shows diagrams illustrating CSI after different types of CSI compression are carried out in order to generate CSI reports,

FIG. 20 is a schematic diagram of a procedure according to example embodiments,

FIG. 21 is a diagram comparing outcomes of different CSI feedback codebook configurations according to example embodiments,

FIG. 22 shows a diagram illustrating outcomes of different CSI feedback codebook configurations according to example embodiments,

FIG. 23 shows a diagram illustrating outcomes of different CSI feedback codebook configurations according to example embodiments,

FIG. 24 is a table representing an example of codebook parametrization for a multirank case with RI and TDCP as main configuration selectors, and

FIG. 25 is a block diagram alternatively illustrating apparatuses according to example embodiments.

Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

According to example embodiments, in general terms, there are provided measures and mechanisms for (enabling/realizing) flexible channel state information configuration.

As mentioned above, latest related Rel 18 CSI enhancements brought two new types of codebooks extensions. One is the CJT case, which is an extension of legacy Rel 16 for multiple TRPs which still uses space-frequency compression; and the Doppler codebook extension, which uses prediction and time-to-Doppler domain compression (on the top of space-frequency compression) for tackling the CSI aging problem at higher speeds.

Subsequently, it is focused on the further enhancement and flexibilization of the Type II space-frequency CSI codebook based reporting, however at some extent, CSI prediction is also covered by the following.

In this sense, for high mobility, the reconfiguration of CSI may be still done without any CSI aging compensation (i.e. without CSI prediction) only for the sake of optimizing the resources used on reporting.

In the following, particularly the bit overhead and other features that define the CSI codebook based reporting scheme are addressed.

However, it also might imply the need to reconfigure the input reference signals used for the CSI feedback process accordingly. Hence, the present disclosure also aims very particularly on the benefit-to-cost ratio of the CSI feedback setup with significant emphasis on the mobility awareness. In other words, it is important to avoid over-dimensioned configurations if they may not provide further benefits for a given scenario with specific mobility characteristics. Example embodiments enable to choose the simplest and most resource efficient CSI feedback setup with a tailored configuration.

Simple switching between two different codebooks, i.e., Type I/Type II provides some technical advantage as Type I might work better than Type II at high speed with a more efficient use of resources (i.e. less bit overhead and computational complexity). However, this approach is still sub-optimal. The CSI codebook based reporting reconfiguration should be able to provide a more gradual change in the setup of the different CSI parametrization tailored to the UE transmission conditions, particularly in higher mobility conditions.

According to example embodiments, a harmonization framework can be created for building a standardized reconfiguration model of the CSI depending on the given inputs of TDCP, RI, PMI, CQI and other potentially new CSI quantities in which 1) multiple parameters of the CSI feedback based codebook can be jointly and dynamically reconfigured by having received a certain set of CSI inputs, and 2) no need for switching between codebooks of a different type (i.e. Type I/II), or carrying out multiple chipset implementations of different existing CSI schemes.

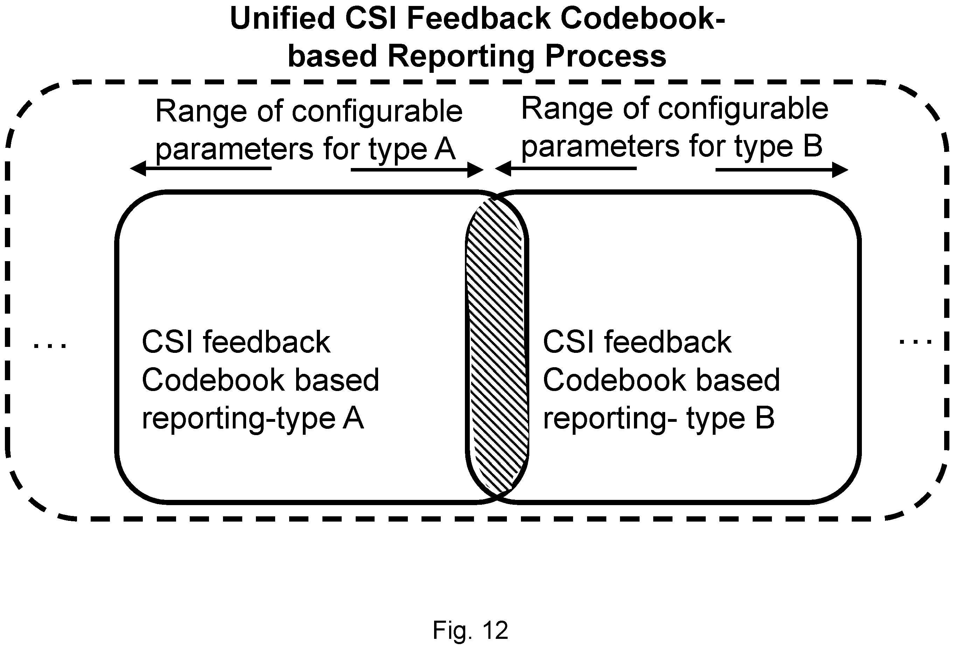

In essence, the CSI input is based on the same mathematical and physical foundations, no matter which codebook is used, and common parameters can be reconfigured. As defined now, current codebook type definitions impose a certain fixed quantization, beam selection, frequency information reporting scheme and, in general, a restricted range of configurable characteristics. However based on the fact that CSI codebook restrictions are just arbitrarily defined by the standard, the CSI process characteristics may be harmonically merged in a single seamless reconfigurable "Unified CSI feedback codebook based reporting process" with customizable and wide range CSI parametrization definition as illustrated in FIG. 12.

FIG. 12 is a schematic representation of a unified codebook according to example embodiments, and in particular illustrates a unified CSI feedback based codebook as a combination of arbitrarily restricted CSI feedback codebook based types.

Hence, in brief, according to example embodiments, the information contained in the CSI report are used jointly, this including any piece of information of at least RI and TDCP with PMI, CQI, and/or any additional indicator embedded in the CSI report obtained from the UE as input to perform the CSI codebook based reporting reconfiguration. For carrying out this, additional signals besides CSI-RS, for instance, TRS and SRS may be required. Further, according to example embodiments a unified CSI feedback codebook definition with a set of one or more CSI configuration parameters is provided.

Among the set of one or more reconfigurable parameters, according to example embodiments,

- rank restriction on the rank indicator (RI),
- type of CSI calculation: port selection and/or predefined codebook (e.g. DFT),
- number of spatial beams (L),
- number of delay taps (M),
- quantization setup of CSI coefficients,
- wideband or subband reporting setup,
- frequency compression activation or deactivation, and/or
- CSI prediction activation or deactivation

may be included.

In addition, according to example embodiments, CSI-RS, TRS and/or SRS parameter configuration may be provided, including:

- cell/group/UE specific RS allocation,
- aperiodic/Periodic RS configuration, and/or
- number of RS sets.

The RS configuration is necessary for the CSI codebook based reporting, nonetheless, in many cases it might be considered fixed due to network resource constraints.

Example embodiments are specified below in more detail.

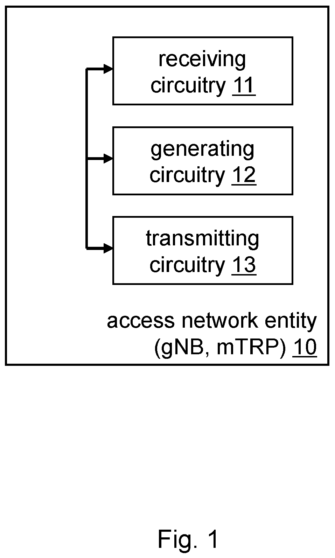

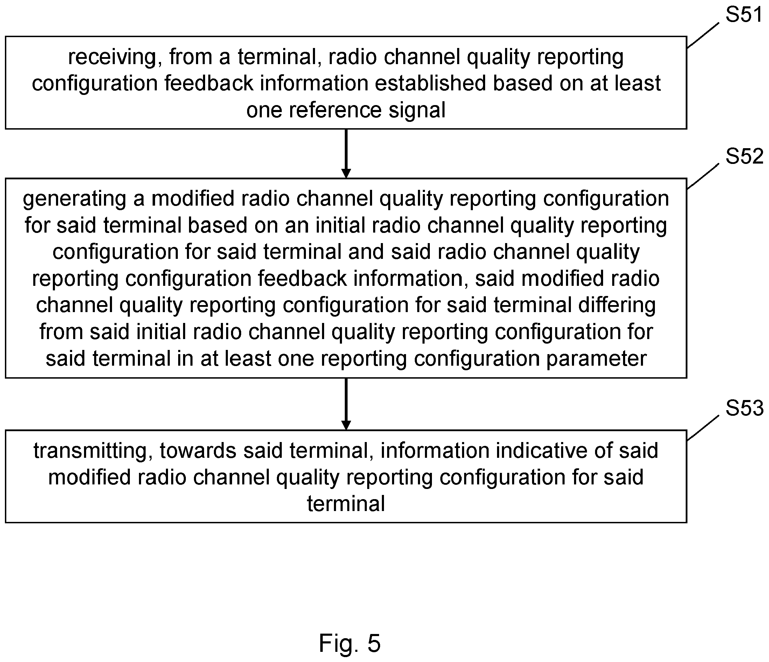

FIG. 1 is a block diagram illustrating an apparatus according to example embodiments. The apparatus may be an access network node or entity 10 such as a gNB or multiple TRPs comprising a receiving circuitry 11, a generating circuitry 12, and a transmitting circuitry 13. The receiving circuitry 11 receives, from a terminal, radio channel quality reporting configuration feedback information established based on at least one reference signal. The generating circuitry 12 generates a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter. The transmitting circuitry 13 transmits, towards said terminal, information indicative of said modified radio channel quality reporting configuration for said terminal. FIG. 5 is a schematic diagram of a procedure according to example embodiments. The apparatus according to FIG. 1 may perform the method of FIG. 5 but is not limited to this method. The method of FIG. 5 may be performed by the apparatus of FIG. 1 but is not limited to being performed by this apparatus.

As shown in FIG. 5, a procedure according to example embodiments comprises an operation of receiving (S51), from a terminal, radio channel quality reporting configuration feedback information established based on at least one reference signal, an operation of generating (S52) a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and an operation of transmitting (S53), towards said terminal, information indicative of said modified radio channel quality reporting configuration for said terminal.

According to example embodiments, channel quality reporting configuration may include, for example, reporting configuration parameters. In this regard, mobility and rank conditions may be considered as main characteristics for defining a channel state information codebook (re)configuration.

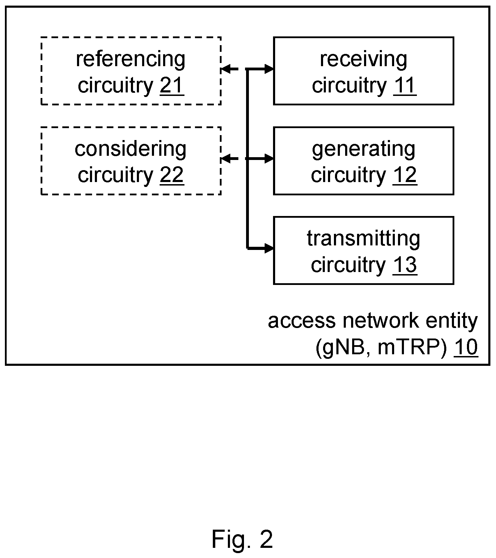

FIG. 2 is a block diagram illustrating an apparatus according to example embodiments. In particular, FIG. 2 illustrates a variation of the apparatus shown in FIG. 1. The apparatus according to FIG. 2 may thus further comprise a referencing circuitry 21 and/or a considering circuitry 22.

In an embodiment at least some of the functionalities of the apparatus shown in FIG. 1 (or 2) may be shared between two physically separate devices forming one operational entity. Therefore, the apparatus may be seen to depict the operational entity comprising one or more physically separate devices for executing at least some of the described processes.

According to a variation of the procedure shown in FIG. 5, exemplary additional operations are given, which are inherently independent from each other as such. According to such variation, an exemplary method according to example embodiments may comprise an operation of generating said initial radio channel quality reporting configuration for said terminal based on radio channel quality reporting capabilities of said terminal, said initial radio channel quality reporting configuration for said terminal including at least one reporting configuration parameter, an operation of transmitting, towards said terminal, information indicative of said initial radio channel quality reporting configuration for said terminal, and an operation of transmitting said at least one reference signal.

According to a variation of the procedure shown in FIG. 5, exemplary additional operations are given, which are inherently independent from each other as such. According to such variation, an exemplary method according to example embodiments may comprise an operation of receiving, from said terminal, information on said radio channel quality reporting capabilities of said terminal.

According to further example embodiments, said radio channel quality reporting capabilities of said terminal include at least one of the following: space compression support capabilities of said terminal, or subband/wideband reporting capabilities of said terminal, or frequency compression support capabilities of said terminal, or time prediction support capabilities of said terminal, or time compression support capabilities of said terminal, or quantization capabilities of said terminal.

According to further example embodiments, said radio channel quality reporting configuration feedback information include at least one of the following: information included in a channel state information report, or at least one terminal transmitted reference signal.

According to further example embodiments, said information included in said channel state information report include at least one of the following: a rank indicator value, or a set of time domain channel properties values, or a set of precoding matrix indicators, or a set of channel quality indicator values.

According to further example embodiments, said information indicative of said modified radio channel quality reporting configuration includes at least one of the following: information on a rank restriction on a rank indicator, or information on a type of channel state information calculation, or information on a number of spatial beams, or information on a number of delay taps, or information on a quantization setup of channel state information coefficients, or information on a wideband or subband reporting setup, or information on frequency compression activation or deactivation, or information on channel state information prediction activation or deactivation, or information on reference signals configuration.

According to a variation of the procedure shown in FIG. 5, exemplary details of the generating operation (generating said modified radio channel quality reporting configuration for said terminal) are given, which are inherently independent from each other as such. Such exemplary generating operation (generating said modified radio channel quality reporting configuration for said terminal) according to example embodiments may comprise an operation of referencing to at least one stored table including radio channel quality reporting configuration definitions. Said information indicative of said modified radio channel quality reporting configuration includes at least one of the following: a set of indexes to said modified radio channel quality reporting configuration in said at least one stored table, or said at least one reporting configuration parameter differing from said initial radio channel quality reporting configuration for said terminal.

According to a variation of the procedure shown in FIG. 5, exemplary additional operations and exemplary details of the generating operation (generating said modified radio channel quality reporting configuration for said terminal) are given, which are inherently independent from each other as such. According to such variation, an exemplary method according to example embodiments may comprise an operation of receiving, from said terminal, information on at least one suggested reporting configuration parameter to be modified. Further, such exemplary generating operation (generating said modified radio channel quality reporting configuration for said terminal) according to example embodiments may comprise an operation of considering said at least one suggested reporting configuration parameter to be modified upon generation of said modified radio channel quality reporting configuration for said terminal.

Thus, a network entity may receive UE capabilities from the UE, transmit a set of reference signals (CSI-RS and/or TRS or any other RS) and an initial CSI configuration to carry out a CSI feedback process, receive reference signaling and/or CSI indications of at least mobility and/or rank conditions from the UE based at least partially on the transmitted reference signals, determine a new CSI configuration based on the received reference signaling and/or CSI indications from the UE, and transmit the new configuration setup to the UE.

The UE capabilities may comprise space compression support capabilities, subband/wideband reporting capabilities, frequency compression support capabilities, time prediction and/or time compression support capabilities, and/or quantization capabilities.

The receiving of reference signaling and/or CSI indications from the UE based at least partially on the transmitted reference signals may comprise receiving a CSI report at the network entity, which comprises least the obtention of a set of RI and TDCP values, and/or with PMI, CQI values, and/or receiving any other additional type of CSI indications embedded in the CSI report, and/or - receiving, a set of reference signals (e.g. sounding reference signals, SRS or any set of reference signals sent by the UE).

When transmitting the new CSI parameter configuration update, the CSI codebook based reporting parameters that can be reconfigured are at least one of rank restriction on the rank indicator (RI), type of CSI calculation: port selection and/or predefined codebook (e.g. DFT), number of spatial beams (L), number of delay taps (M), quantization setup of CSI coefficients, wideband or subband reporting setup., frequency compression activation or deactivation, and/or CSI prediction activation or deactivation.

When transmitting the new CSI parameter configuration update, the reference signal (CSI-RS, TRS and/or SRS) parameters that can be reconfigured are at least one of cell/group/UE specific RS allocation, aperiodic/periodic RS configuration, and/or number of RS sets.

The new CSI configuration can be determined based on one or more fixed table of configurations. The network might send an index (or a set of indexes) to indicate the determined configuration or several new reconfigured CSI parameters can be added into a control message. The mechanism of CSI configuration search in such table of configuration rules can be based on a decision-tree, artificial intelligence (AI) / machine learning (ML) based or any other kind of implementation.

For CSI from a UE (with variable speed), according to example embodiments, TDCP and RI values (main parameters) are used with other parameters (e.g. PMI, CQI) to determine a new setup in a set of one or more CSI configuration parameters. In case of not having TDCP information available, instead, according to example embodiments, the measurement on the SRS are used to calculate time correlation information to replace the TDCP information.

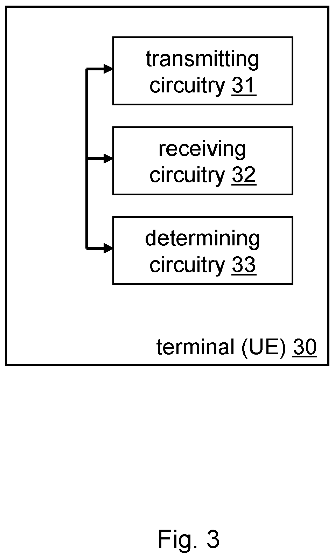

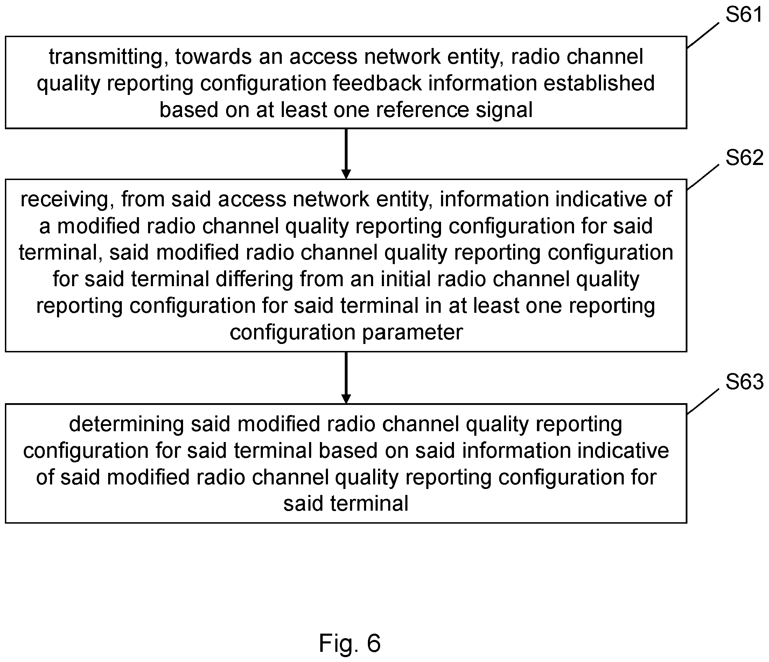

FIG. 3 is a block diagram illustrating an apparatus according to example embodiments. The apparatus may be a terminal 30 such as a UE comprising a transmitting circuitry 31, a receiving circuitry 32, and a determining circuitry 33. The transmitting circuitry 31 transmits, towards an access network entity, radio channel quality reporting configuration feedback information established based on at least one reference signal. The receiving circuitry 32 receives, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter. The determining 33 determines said modified radio channel quality reporting configuration for said terminal based on said information indicative of said modified radio channel quality reporting configuration for said terminal. FIG. 6 is a schematic diagram of a procedure according to example embodiments. The apparatus according to FIG. 3 may perform the method of FIG. 6 but is not limited to this method. The method of FIG. 6 may be performed by the apparatus of FIG. 3 but is not limited to being performed by this apparatus.

As shown in FIG. 6, a procedure according to example embodiments comprises an operation of transmitting (S61), towards an access network entity, radio channel quality reporting configuration feedback information established based on at least one reference signal, an operation of receiving (S62), from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and an operation of determining (S63) said modified radio channel quality reporting configuration for said terminal based on said information indicative of said modified radio channel quality reporting configuration for said terminal.

According to example embodiments, channel quality reporting configuration may include, for example, reporting configuration parameters. In this regard, mobility and rank conditions may be considered as main characteristics for defining a channel state information codebook (re)configuration.

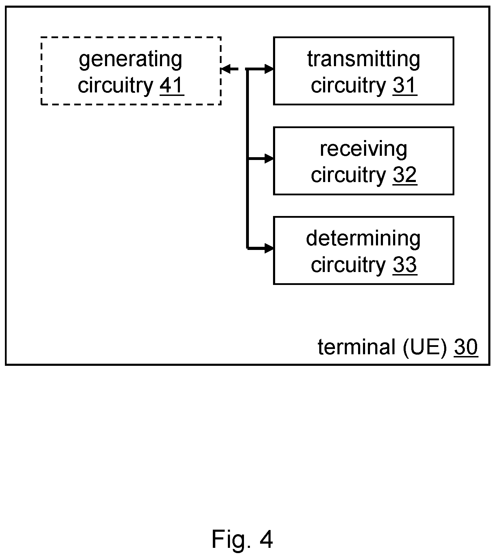

FIG. 4 is a block diagram illustrating an apparatus according to example embodiments. In particular, FIG. 4 illustrates a variation of the apparatus shown in FIG. 3. The apparatus according to FIG. 4 may thus further comprise a generating circuitry 41.

In an embodiment at least some of the functionalities of the apparatus shown in FIG. 3 (or 4) may be shared between two physically separate devices forming one operational entity. Therefore, the apparatus may be seen to depict the operational entity comprising one or more physically separate devices for executing at least some of the described processes.

According to a variation of the procedure shown in FIG. 6, exemplary additional operations are given, which are inherently independent from each other as such. According to such variation, an exemplary method according to example embodiments may comprise an operation of receiving, from said access network entity, information indicative of said initial radio channel quality reporting configuration for said terminal, said initial radio channel quality reporting configuration for said terminal including at least one reporting configuration parameter, an operation of receiving said at least one reference signal, and an operation of generating said radio channel quality reporting configuration feedback information based on said at least one reference signal and said initial radio channel quality reporting configuration for said terminal.

According to a variation of the procedure shown in FIG. 6, exemplary additional operations are given, which are inherently independent from each other as such. According to such variation, an exemplary method according to example embodiments may comprise an operation of transmitting, towards said access network entity, information on radio channel quality reporting capabilities of said terminal.

According to further example embodiments, said radio channel quality reporting capabilities of said terminal include at least one of the following: space compression support capabilities of said terminal, or subband/wideband reporting capabilities of said terminal, or frequency compression support capabilities of said terminal, or time prediction support capabilities of said terminal, or time compression support capabilities of said terminal, or quantization capabilities of said terminal.

According to further example embodiments, said radio channel quality reporting configuration feedback information include at least one of the following: information included in a channel state information report, or at least one terminal transmitted reference signal.

According to further example embodiments, said information included in said channel state information report include at least one of the following: a rank indicator value, or a set of time domain channel properties values, or a set of precoding matrix indicators, or a set of channel quality indicator values.

According to further example embodiments, said information indicative of said modified radio channel quality reporting configuration includes at least one of the following: information on a rank restriction on a rank indicator, or information on a type of channel state information calculation, or information on a number of spatial beams, or information on a number of delay taps, or information on a quantization setup of channel state information coefficients, or information on a wideband or subband reporting setup, or information on frequency compression activation or deactivation, or information on channel state information prediction activation or deactivation, or information on reference signals configuration.

According to further example embodiments, said information indicative of said modified radio channel quality reporting configuration includes at least one of the following: a set of indexes to said modified radio channel quality reporting configuration in at least one stored table including radio channel quality reporting configuration definitions, or said at least one reporting configuration parameter differing from said initial radio channel quality reporting configuration for said terminal.

According to a variation of the procedure shown in FIG. 6, exemplary additional operations are given, which are inherently independent from each other as such. According to such variation, an exemplary method according to example embodiments may comprise an operation of determining, based on an observed radio channel quality behavior, at least one suggested reporting configuration parameter to be modified, and an operation of transmitting, towards said access network entity, information on said at least one suggested reporting configuration parameter to be modified.

According to example embodiments, the key point to quantify this observed radio channel quality behavior are mobility conditions and channel rank.

Thus, a user equipment may transmit/indicate UE capabilities to the network entity (e.g. consisting of one or more gNBs/TRPs), receive from the network entity a set of reference signals (CSI-RS and/or TRS or any other RS) and an initial CSI configuration to carry out a CSI feedback process, calculate CSI based on the measurement on the CSI-RS and/or TRS to provide at least information of the UE mobility and/or rank conditions, transmit reference signaling and/or CSI indications to the network entity based at least partially on the initial CSI configuration and calculated CSI, and receive in response a new CSI configuration parametrization update from the network entity based on the previously transmitted reference signaling and/or CSI indications sent from the UE to the network entity.

The transmitted/indicated UE capabilities may comprise space compression support capabilities, subband/wideband reporting capabilities, frequency compression support capabilities, time prediction and/or time compression support capabilities, and/or quantization capabilities.

The transmission of reference signaling and/or CSI indications to the network entity based at least partially on the calculated CSI may comprise transmitting, a CSI report to the network entity, which comprises at least the obtention of a set of RI and TDCP values, and/or with PMI, CQI values, and/or receiving any other additional type of CSI indications embedded in the CSI report, and/or transmitting a set of reference signals (e.g. sounding reference signals, SRS or any set of reference signals sent by the UE).

When receiving the new CSI parameter configuration update, the CSI codebook based reporting parameters that can be reconfigured are at least one of rank restriction on the rank indicator (RI), type of CSI calculation: port selection and/or predefined codebook (e.g. DFT), number of spatial beams (L), number of delay taps (M), quantization setup of CSI coefficients, wideband or subband reporting setup, frequency compression activation or deactivation, and/or CSI prediction activation or deactivation.

When receiving the new CSI parameter configuration update, the reference signal (CSI-RS, TRS and/or SRS) parameters that can be reconfigured are at least one of cell/group/UE specific RS allocation, aperiodic/periodic RS configuration, and/or number of RS sets.

Example embodiments outlined and specified above are explained below in more specific terms.

In order to carry out the reconfiguration, the UE must provide to the network the CSI report containing TDCP and RI with PMI, CQI. However, TDCP might be optional in certain cases (depending on the configuration/availability of TRS). According to example embodiments, other further metrics or indicators can be included in the CSI report, which can be useful to carry out this reconfiguration.

In addition to a CSI report, also sounding reference signals (SRS) transmitted from the UE can provide useful information to carry out this reconfiguration. For instance, SRS information might be useful in the absence of TDCP functionalities with TRS, to calculate time correlation information.

Whether with TDCP based on TRS or SRS, it may be possible to make reconfiguration based on mobility conditions.

Other additional indicators like CQI can also be a useful to account the relative link conditions between the UE and gNB based on the SNR levels.

Supported on the notion of SNR levels, and for instance other available UE positioning indicators or channel statistics obtained from the UE, according to example embodiments, this might serve as an indication of the type of predominant channel conditions, e.g., LOS, NLOS, and beam configuration of the CSI report can be adapted accordingly for UEs located in the center of the cell or in the edges.

Other CSI support characteristics may also be reconfigured. For instance, the characteristics related to the reference signals, either for the downlink side, i.e., TRS or CSI-RS, or for the uplink side, i.e., SRS, might also be tailored depending on measurement needs. These signals might need to be reconfigured for being, for instance, cell, group or UE specific precoded. For instance, for port selection, CSI group or UE specific CSI-RS are needed, whereas for DFT codebook CSI, a cell specific set of CSI-RS is the best choice.

Moreover, for the case of periodic signals, the time periodicity might need to be reconfigured or secondary sets of periodic and/or aperiodic signal might need to be added for carrying out joint measurements, which, although not part of the CSI codebook based reporting configuration itself, are necessary procedures to support the CSI measurements which support the CSI reporting.

According to example embodiments, CSI report and support characteristics as indicated above are reconfigured at least in part.

According to example embodiments, the network, in response to the received CSI indicators, provides a CSI codebook based reporting reconfiguration based on indexes in a table of possible configuration values based on respective inputs of RI and/or TDCP values accompanied with PMI and CQI and/or processed metrics obtained from SRS and/or any other useful indicator or metric reported by the UE.

According to alternative example embodiments, instead of using indexes from fixed tables, the network responds with one or more CSI configuration parameter values to be updated in a configuration message. The information used, recovered from the CSI report or SRS measurements, can be averaged historically, or instantaneous values may be used on the network side.

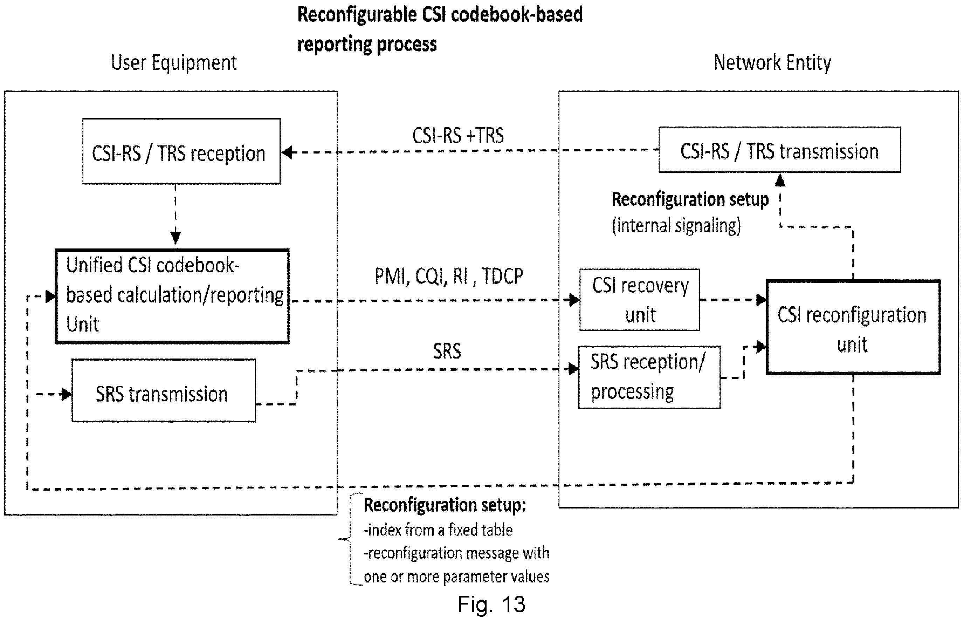

A basic diagram of inputs and outputs indicating the interaction of the UE with the network entity is provided in FIG. 13 based on the discussion presented before.

FIG. 13 is a schematic diagram of a procedure according to example embodiments, and in particular illustrates a diagram of inputs and outputs indicating the interaction of the UE with the network entity to carry out the CSI codebook based report reconfiguration.

On the other hand, as already mentioned, the CSI input (RI, TDCP, PMI, CQI or any other) provides the required information to reconfigure all the parameters of the CSI feedback codebook based process.

The simplest case is represented by a limited number of combinations of each parameter, in which some parameters may have higher hierarchy and then the network has the capability to narrow down to a number of possible reconfiguration choices of lower hierarchy parameters.

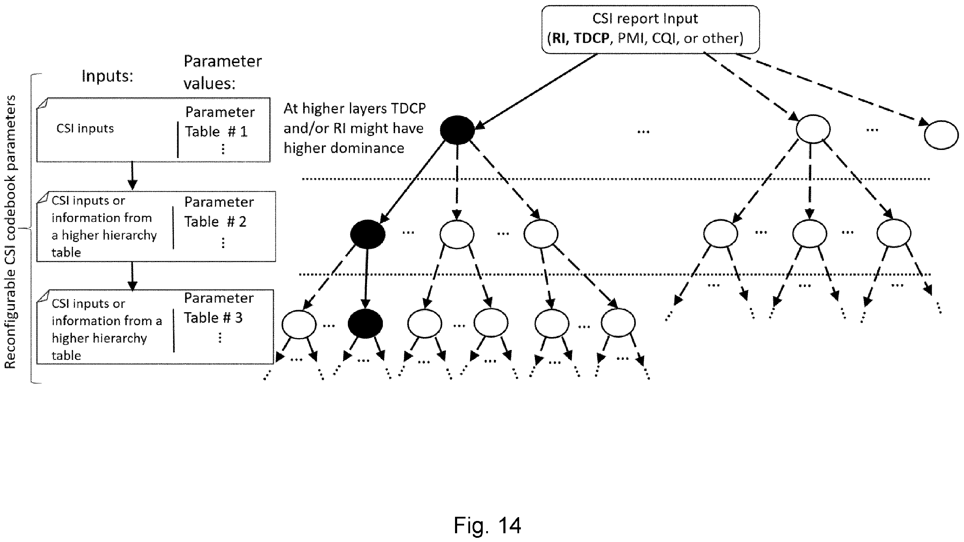

According to example embodiments, the process can be simply carried out as a selection tree, as depicted in FIG. 14.

FIG. 14 schematically illustrates a tree-structure codebook reconfiguration according to example embodiments, and in particular illustrates a non-fully meshed tree structure of the CSI based codebook reconfiguration.

In a standard definition, a set of one or more tables can be defined with different corresponding mapping of CSI inputs to corresponding CSI reconfigurable parameter values. The tables can be linked to each other and just cover a subset of parameters each. This could avoid the issue of having a very large table listing all the combinations. Moreover, the UE could be equipped with other type of signaling and/or indications to complement the information obtainable from TDCP, RI, PMI and CQI.

In the case of using a selection tree for the codebook configuration (as in FIG. 14), if the UE capabilities are informed to the network entity first, then a default configuration can be proposed based on UE characteristics. Then, such initial configuration may allow training the CSI process to understand the features to be disabled or kept enabled, and allow the re-assessment of the CSI parametrization after a learning window of one or more CSI reports.

Most likely, the higher layer of the selection tree would be dominated by the TDCP and RI selection values in order to more carefully narrow down the configuration based on mobility and rank conditions.

Regarding the CSI inputs required to define the choices in the parameter tables, it could potentially require changes on the way how the CSI quantities PMI, CQI, TDCP or RI are conventionally calculated or reported. This would might include, for instance, changes on the quantization scheme or the structure of the values reported to be able to differentiate different states in the CSI reconfiguration tables. While example CSI quantities are mentioned above, these are not limiting, and any type of CSI quantity could be used as input for the reconfigurable CSI feedback codebook based mechanism.

According to further example embodiments, the UE is enabled to provide explicit information to reconfigure one or more parameters or suggest one or more indexes of the reconfiguration tables with respective configuration setups.

This mechanism is useful as the UE has a better visibility of channel data before the CSI is calculated and can detect behaviors or provide information which cannot be extracted from the traditional CSI quantities as reported, e.g. TDCP, RI, PMI, CQI.

For instance, the UE might request to increase the number of beams, increase the quantization granularity, enable a higher rank reporting, increase number of sub-bands or number of delay taps.

This is also useful for the network entity, because the information in the CSI inputs might only allow the network entity to reconfigure the parameters in the opposite sense only to reduce or decimate the CSI structure, e.g., from a default initial configuration, to lower the number of beams, reduce the quantization granularity, restrict the rank, decrease the number of sub-bands or reported delay taps.

That is, if the UE is able to suggest to increase the value of a given parameter, this would be useful for a more precise reconfiguration. Nonetheless, these UE suggestions must be consistent with the mobility and rank conditions reported.

Hence, according to example embodiments, the UE is enabled to provide explicit information to reconfigure one or more parameters or suggest one or more indexes of the reconfiguration tables with respective configuration setups consistent with the mobility and rank conditions reported.

In contrast to the previous approach, in which the set of CSI configuration parameter combinations is not fully meshed and a tree of hierarchical choices can be implemented along with respective selection tables, a more intricated case can be addressed as follows. Such more intricated case may be the situation in which the full set of combinations is required to be checked by means of greedy approaches or exhaustive search solutions to find the optimal setup.

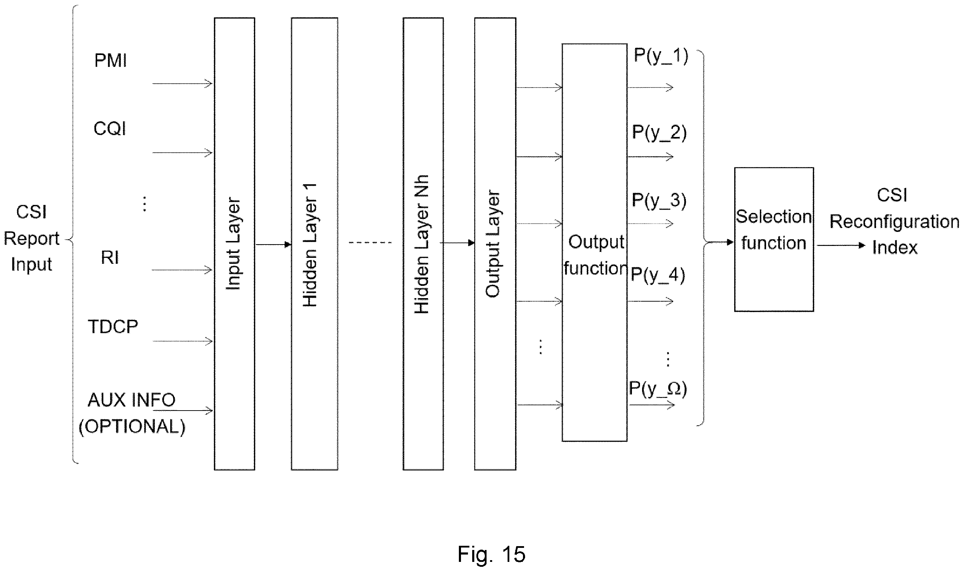

FIG. 15 schematically illustrates a machine learning model based codebook reconfiguration according to example embodiments, and in particular illustrates an example of the CSI reconfiguration unit based on a ML model.

The ML model may consider as input the CSI values reported, e.g., TDCP, RI, PMI, CQI, in addition to any other auxiliary information that may help to improve the model capabilities.

Then, the information passes to a cascade of internal blocks (hidden layer 1, ..., hidden layer Nh) based on neural networks (NN). In this case, the information moves in the forward direction only from the input to the output blocks. The Output layer has $\Omega$ output parameters corresponding to all the CSI reconfiguration indexes.

Usable training methods are known for a person skilled in the ML art. In one example, the set of internal blocks with input/output layers may be trained with a supervised machine learning technique using as labels the optimal CSI reconfiguration index (or a set optimal CSI reconfiguration indexes) determined for the UE.

After training, the ML model is used for inference.

The UE reports the CSI values (TDCP, RI, PMI, CQI or any other additional indication in the CSI) which are used as input to the ML model to predict the optimal CSI reconfiguration ID.

The ML model deployed to the network node may provide better reconfiguration performance than other methods like decision tree approaches for the ability of ML learning models (e.g. neural networks) to learn intricate or convoluted relationships between its inputs and outputs, as in the case of CSI reported values and CSI reconfiguration indexes.

On the other hand, the capabilities of reconfigurability of the unified CSI feedback codebook-based process allows to have several advantages over the legacy solutions with different codebook implementations. Firstly, it provides better and customized performance based on reported CSI conditions. Secondly, it provides iterative capability of reconfiguration, avoiding switching between different codebook implementations with incomplete or inflexible CSI capabilities. Thirdly, if the UE knows the decision logic used by the network, it can anticipate some specific settings or set of possible settings to be pre-loaded in the UE configuration, further reducing the latency of switching parameters. It could also help to detect discrepancies on the provided network configuration.

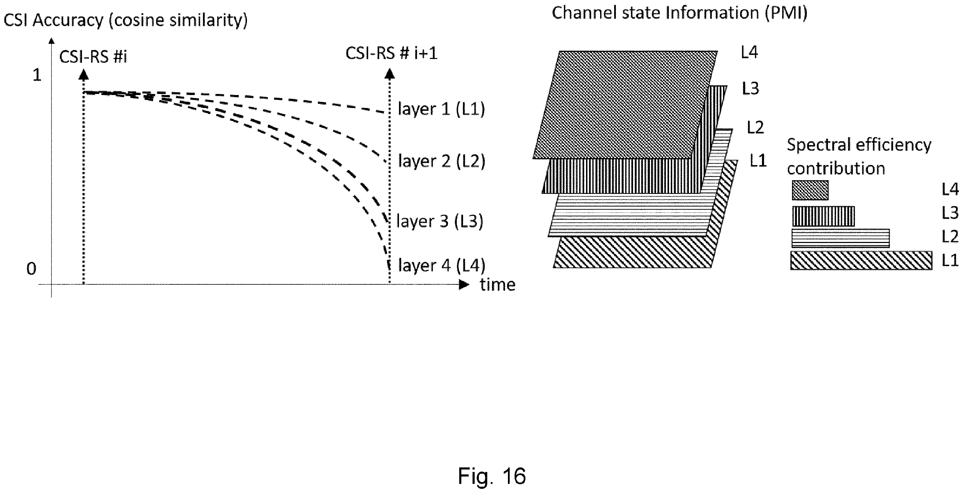

An example of the CSI feedback codebook based reporting reconfiguration process is illustrated in the following by combining the rank indicator (RI) and the Time Domain Channel Properties (TDCP) indicators. As mentioned before, the RI is reported by the UE in every CSI report. However, the CSI information after some milliseconds is outdated, and this degradation is more noticeable for higher ranks as illustrated in FIG. 16.

FIG. 16 schematically illustrates CSI aging, and in particular illustrates CSI aging for different rank layers.

Because of the latter, the network might make wrong assumptions about the real transmission rank for a given UE.

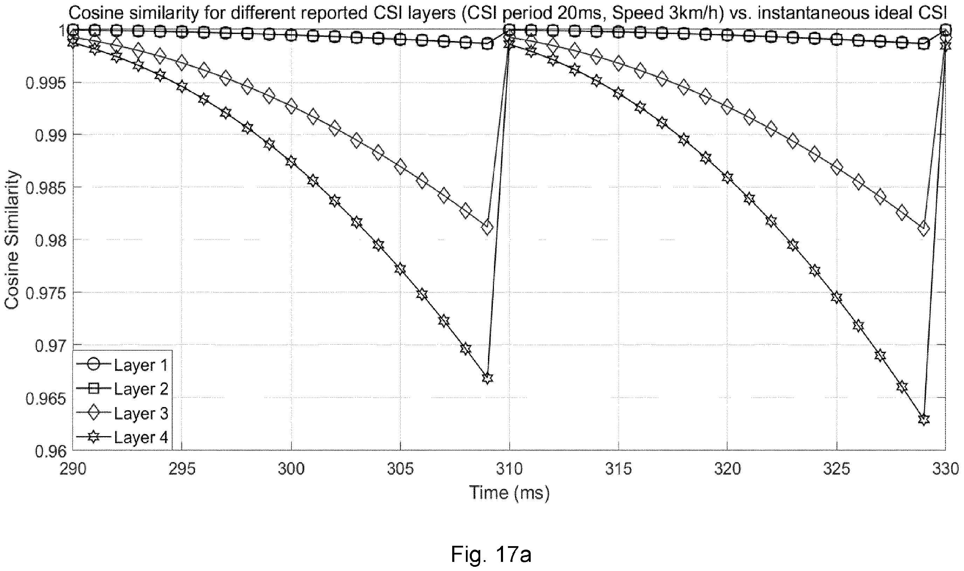

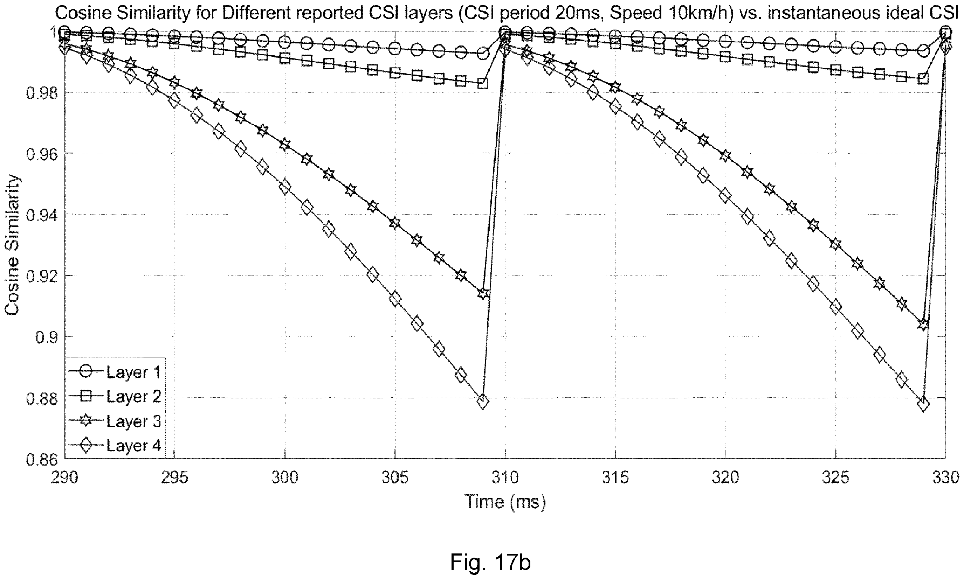

Moreover, the problem illustrated here is further intensified with higher speed and the resulting Doppler spread implications as illustrated in FIG. 17.

FIG. 17 (FIG. 17a and FIG. 17b) shows diagrams illustrating CSI degradation, and in particular illustrates a simulation example of the CSI degradation for an arbitrary UE equipped with 4 Rx antennas at a) 3 km/h and b) 10 km/h and CSI-RS period 20 ms.

As illustrated in FIG. 17, a realistic situation is observed with a simulation to obtain the cosine similarity for each rank layer (up to rank 4) of the last reported PMI vs. the instantaneous ideal CSI measured each millisecond for an arbitrary UE equipped with 4 Rx antennas at 3km/h and 10 km/h respectively with CSI-RS period defined as 20ms.

In the simulation, PMI generated is reported with ideal and unquantized beamforming. From both illustrations, it can be noticed that despite RI is reported every CSI period, the reliability of this value decreases with the time due to the CSI aging before the next CSI refreshment.

As depicted in FIG. 16, the higher layers contribute less to the overall spectral efficiency. One solution according to example embodiments is to combine the information of RI and TDCP to have a better understanding of the rank indicator restriction. This means using reported RI and TDCP to determine if the rank should be restricted or not. The rank restriction would therefore narrow down the parametrization of the CSI codebook-based feedback reporting considering such a rank restriction to a limited set of CSI parameter choices.

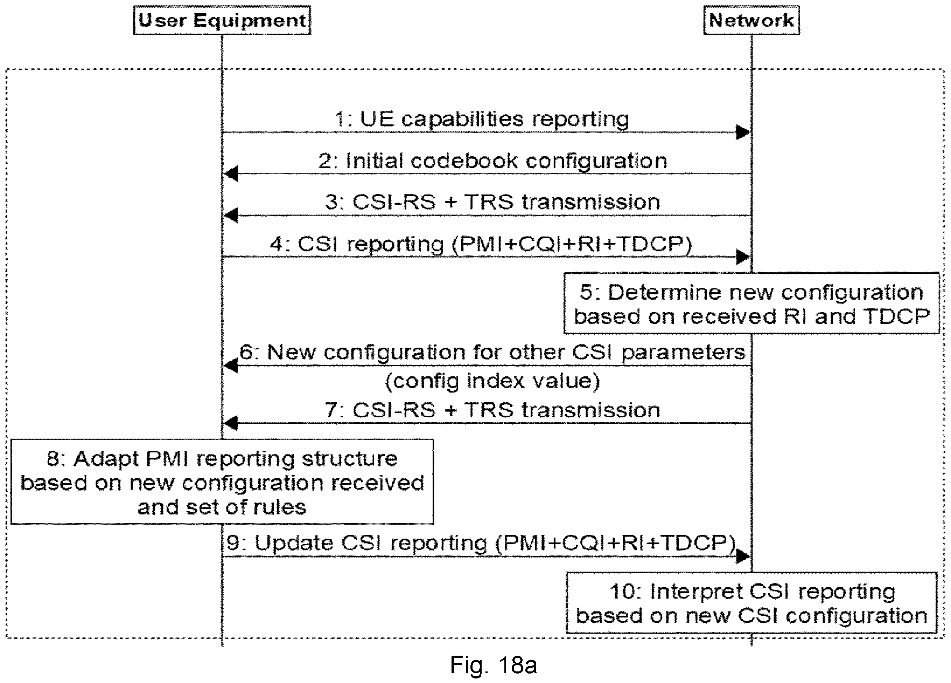

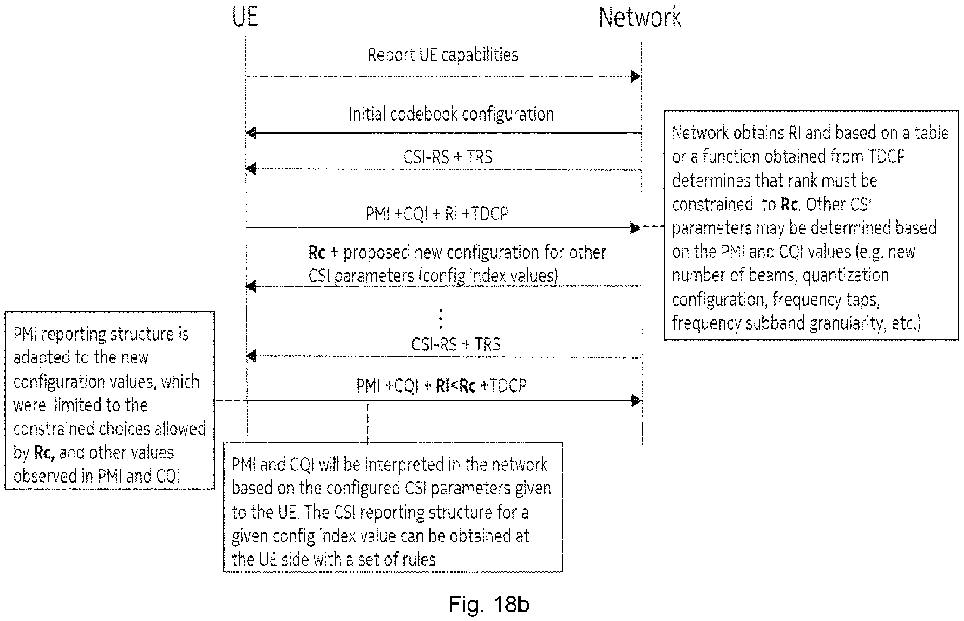

This could be carried as depicted in the diagram of FIG. 18.

FIG. 18a is a schematic diagram of a procedure according to example embodiments, and in particular illustrates a simplified sequence diagram illustrating the mechanism how TDCP may be used as a key high hierarchy control variable for choosing the rank restriction. In addition, how the new choice of rank restriction may cause further reconfiguration changes on other CSI parameters based on values from PMI and/or CQI.

FIG. 18b is a schematic diagram of a procedure according to example embodiments, and in particular illustrates a detailed sequence diagram illustrating the mechanism how TDCP may be used as a key high hierarchy control variable for choosing the rank restriction. In addition, how the new choice of rank restriction may cause further reconfiguration changes on other CSI parameters based on values from PMI and/or CQI.

As seen in the FIG. 18, the network may, after having provided an initial configuration, send CSI-RS and TRS, and obtain one or more CSI reports containing RI, TDCP, PMI, CQI.

After one or more CSI reports, the network may as function of the TDCP value decide a safe rank restriction (Rc) for the UE.

Thus, the TDCP becomes a key high hierarchy control variable for the CSI codebook based feedback reconfiguration.

Other CSI parameters like number of beams, quantization configuration, frequency taps, frequency subband granularity, etc., might be also reconfigured based on the amplitude and phase data contained in the PMI space-frequency coefficients (i.e., beam and time delay taps) and CQI, and narrowed down based on the value of Rc.

In response to the UE, the network provides the rank restriction Rc with new configuration index values. Based on these configuration index values, the PMI and/or CQI reporting structure might be modified based on the new configuration provided to the UE.

According to example embodiments, the new CSI reporting structure is known by the UE by having a common set of rules known also by the network side.

In addition to the aforementioned reconfiguration narrowed down with a given rank restriction, the report per layer might also be reconfigured to narrow down and optimize the parameters like the number of beams L or the number of frequency-to-delay taps M.

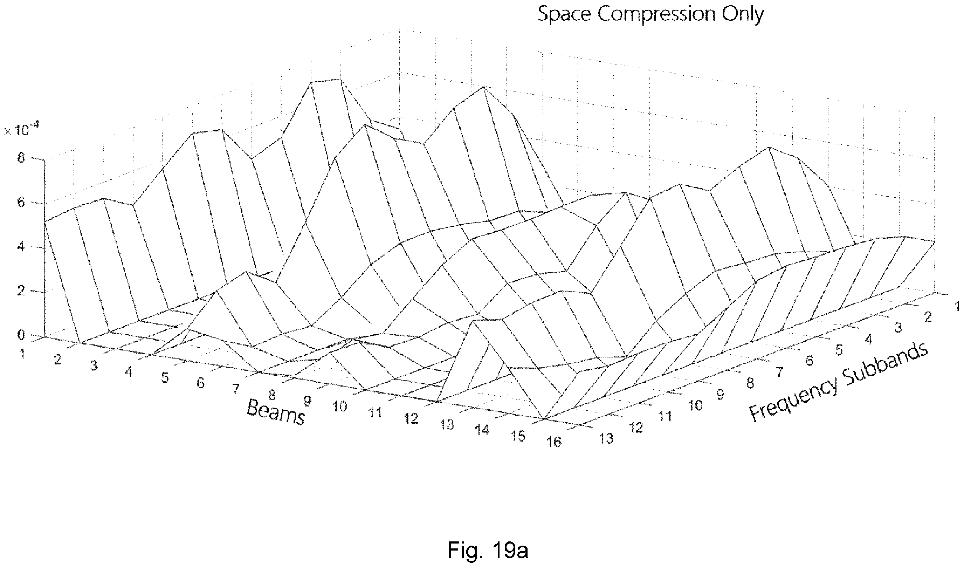

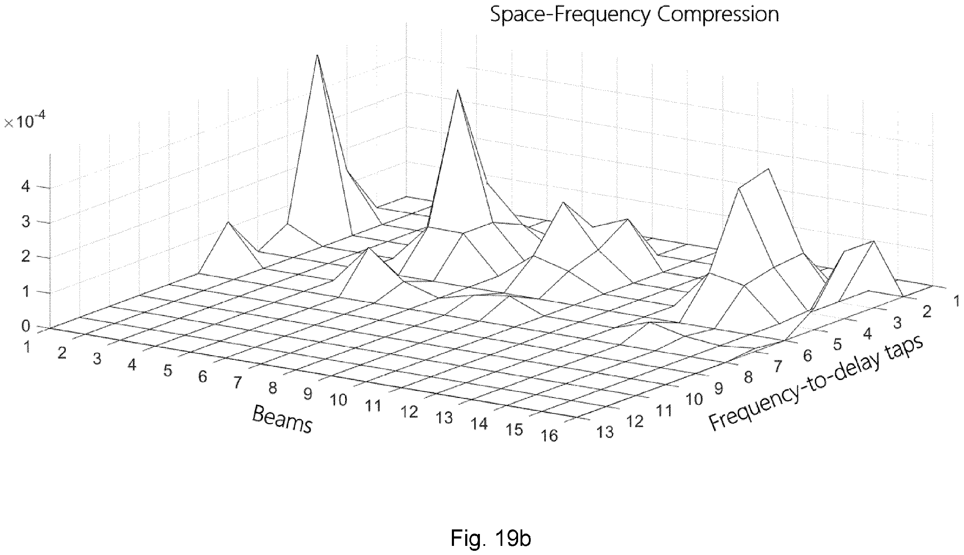

FIG. 19 (FIG. 19a and FIG. 19b) shows diagrams illustrating exemplary CSI compression structures on which the CSI report calculation is based, and in particular illustrate examples for (a) Type II CSI report with Space Compression Only (i.e. Rel 15) and (b) Type II CSI report with Space-Frequency Compression (i.e. Rel 16).

In FIG. 19, an example of the CSI compression structure on which the CSI report is based for a given UE with (a) space compression, i.e. only beam domain like in Rel 15 Type II and (b) joint space-frequency compression, i.e. beam-delay domain representation like in Rel 16 enhanced Type II is provided.

As the space and/or frequency compression can be carried out separately, the values of L and M can be adjusted as a function of observed CSI RS reports and established thresholds in each of the parameters.

According to example embodiments, depending on mobility conditions obtained from TDCP or any other type of useful measurement, the values for L and M may be adjusted.

According to further example embodiments, the frequency compression may be switched-off, then subsequently subband reporting may be provided, and furthermore, if the channel response in frequency presents very flat characteristics, wideband reporting may be provided.

Currently, by having Type I and Type II with different type of configurable independent settings, this flexibility is not possible, and the customization of the CSI codebook parameters cannot be carried out, as parameters of different codebooks cannot be jointly reconfigured.

In the example of FIG. 19, 16Tx antennas with L=4 selected beams and N3= 13 subbands with M=4 taps are set. For instance, the configuration might be reduced from L=4 to L=2 beams and M=4 to M=2 delay taps, considering that some weak space-frequency components provide only a negligible contribution to the CSI report. In addition, according to example embodiments, the mobility conditions might add further restrictions on such parameters.

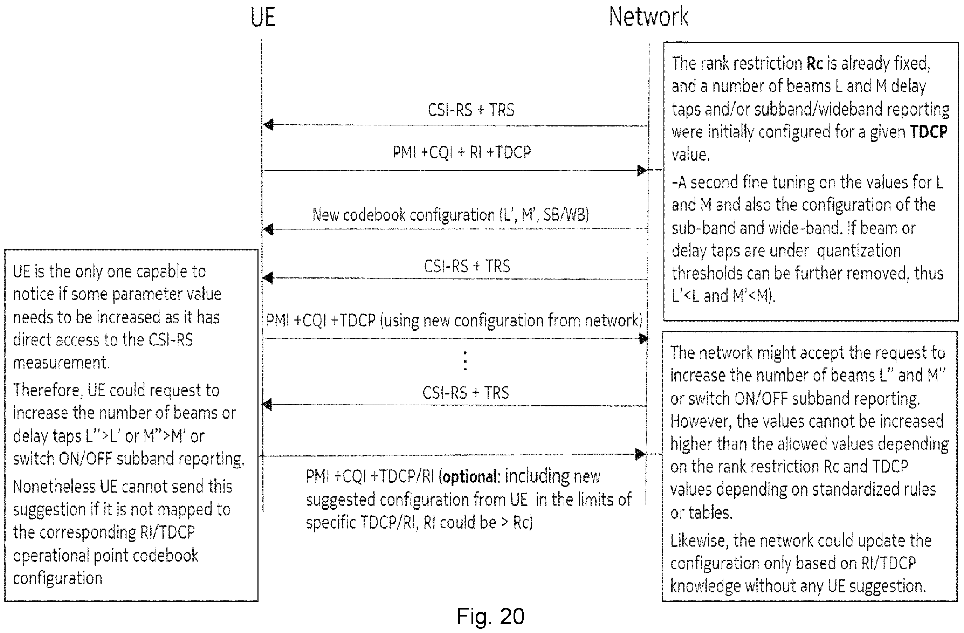

FIG. 20 is a schematic diagram of a procedure according to example embodiments, and in particular illustrate a further reconfiguration of CSI codebook parameters after the mobility and rank conditions have been determined.

In FIG. 20, another sequence diagram is provided which focuses on further reconfigurations after the mobility conditions and rank restrictions have been established.

This might allow to select the number of beams L, the number of delay taps M, and/or the subband/wideband frequency reporting configuration.

The network is capable of providing the reconfiguration of such parameters, but also the UE has the capability to suggest other values. The reasoning behind this is that UE has a better visibility of measured channel, and the UE might detect parameters that should be increased, e.g. increasing the number of beams or delay taps, or switching from wideband to subband. The network has not the capability to increase these parameters in a precise way but only decimates them based on the observed CSI report.

Such suggested values could only be accepted by the network if they correspond to the corresponding possible configuration for the given TDCP/RI combination in the codebook definition.

On the other hand, the network could also infer the necessity to upgrade a set of CSI parameters, if the RI/TDCP change (e.g. UE speed becomes lower), thus the set of possible combinations might change accordingly. Then a default configuration would be chosen for this RI/TDCP operational point and possible further fine reconfigurations might be carried out after that.

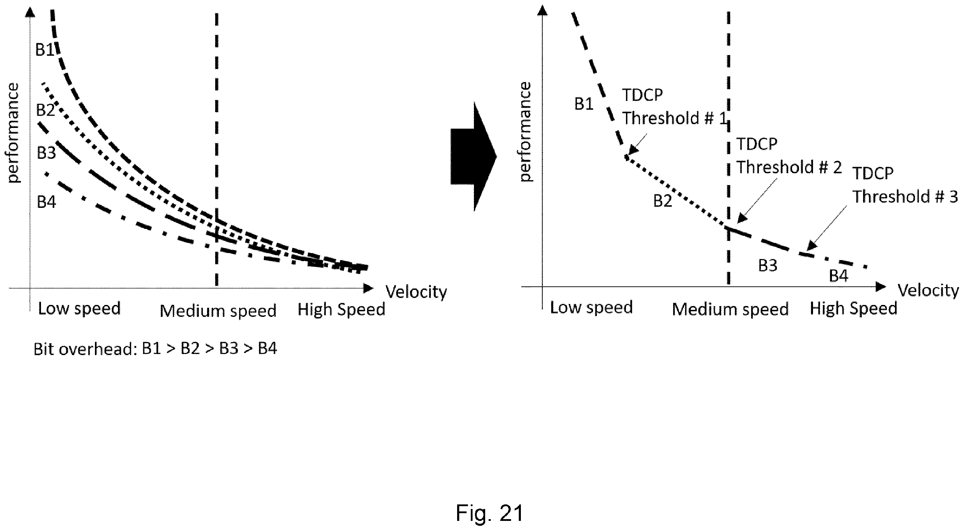

FIG. 21 is a diagram comparing outcomes of different CSI feedback codebook configurations according to example embodiments, and in particular illustrates an example of different CSI feedback codebook configurations with different MU-MIMO performances and different bit overhead as a function of velocity.

As presented in FIG. 21, several CSI codebook configurations with different space-frequency CSI representation may have different bit overheads with B1, B2, B3 and B4 bits respectively being B1 > B2 > B3 > B4. Higher bit overhead and more detailed CSI representation leads to high performance at low speed, where CSI aging is not a problem.

However, the advantages provided by these CSI configurations at low speed rapidly vanishes at higher speeds due to the impact of Doppler spread.

This is much more noticeable in MU-MIMO scenario, in which CSI aging makes it difficult to have an accurate and reliable interference cancellation during pairing.

Reconfiguration may be carried out by being able to establish different TDCP thresholds to modify the configuration. Each TDCP threshold may lead to a given number of beams L, a number of taps M, if frequency compression is switched on, and given number of sub-bands, if the frequency compression is switched off.

According to example embodiments, the reconfiguration provides the capability to optimize the bit overhead while maximizing the attainable performance. For instance, the network might focus on NLOS UEs which are much more vulnerable to higher mobility conditions to narrow down the number of reconfigurable UEs using the unified codebook. At the same time LOS UEs could use an initial configuration and optionally have the further possibility of reconfiguration, however it might be not necessary if the conditions are stable enough.

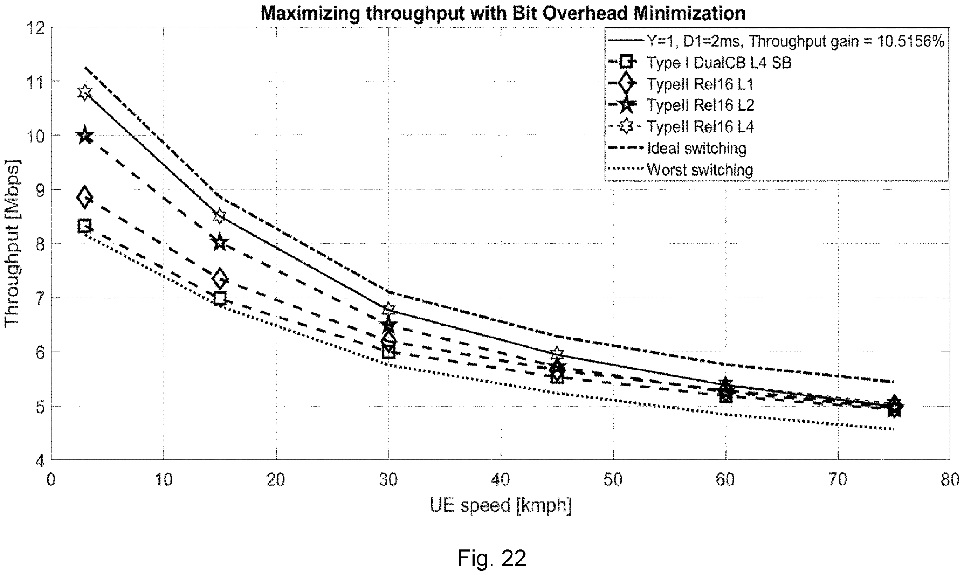

FIG. 22 shows a diagram illustrating outcomes of different CSI feedback codebook configurations according to example embodiments, and in particular illustrates an example with MU-MIMO simulations for Rank-1. Different configurations with different number of beams for Rel 16 enhanced Type II are provided and also Rel 15 Type I is included. By a correct definition of the TDCP based unified CSI codebook reconfiguration is possible to keep the throughput as high as the best Rel 16 enhanced Type II configuration.

In FIG. 22, results of a specific MU-MIMO simulation with data obtained from a system level simulator with NLOS UEs channel scenario are provided.

The range of speeds studied includes 3, 15, 30, 45, 60 and 75 km/h. Single rank is assumed. Different configurations with different bit overhead for Rel. 16 enhanced Type II with L=1, 2 and 4 and M=7 for N3=13 subbands (i.e. frequency compression ON) and Rel 15 Type I with 13 subbands (i.e. frequency compression OFF), 4PRB per subband for 50PRB (10MHz bandwidth) are provided.

Each of the configurations provided are assumed as being sub-cases of the same codebook with extended configurability for number of beams, frequency compression, and/or wideband/subband reporting.

In FIG. 22, the average UE throughput is provided for Rank 1 for each of the configurations.

In addition, upper bound with ideal CSI codebook switching configuration and also the lower bound with worst configuration are provided.

A curve for the unified codebook-based CSI reconfiguration with specific TDCP parametrization Y=1 and D1=2ms is obtained.

As can be taken from FIG. 22, a threshold configuration is capable to obtain same performance as Rel 16 Type II L=4 for all points. Particularly, this means that the threshold setup allows to get an overall 10.56% maximal gain over Type I codebook and also approximatively a 20% maximal reduction of bit overhead with respect to Rel 16 enhanced Type II L=4 for the highest tested speeds with no throughput losses.

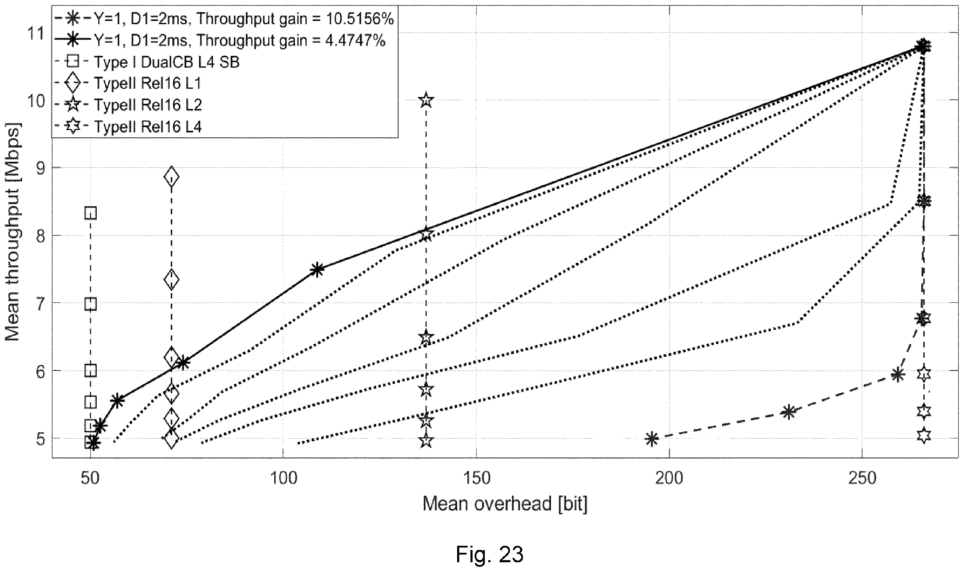

On the other hand, FIG. 23 provides a more complete study of the Unified CSI codebook - TDCP based reconfiguration.

FIG. 23 shows a diagram illustrating outcomes of different CSI feedback codebook configurations according to example embodiments, and in particular illustrates different TDCP operational points for the codebook-based CSI which enables to adapt the bit overhead of the selected codebook parametrization, including changing the number of beams L and enabling to switch ON/OFF the frequency compression.

In FIG. 23, other alternative configurations for the TDCP threshold selection are provided, as this choice is not unique.

Standardized TDCP input for codebook reconfiguration would require a clear definition of the choice of these thresholds in predefined rules and tables.

A configuration of the thresholds in which gain for low speed is only 4.5% is provided as well, but it can very effectively minimize the required bit overhead for each of the analyzed speeds.

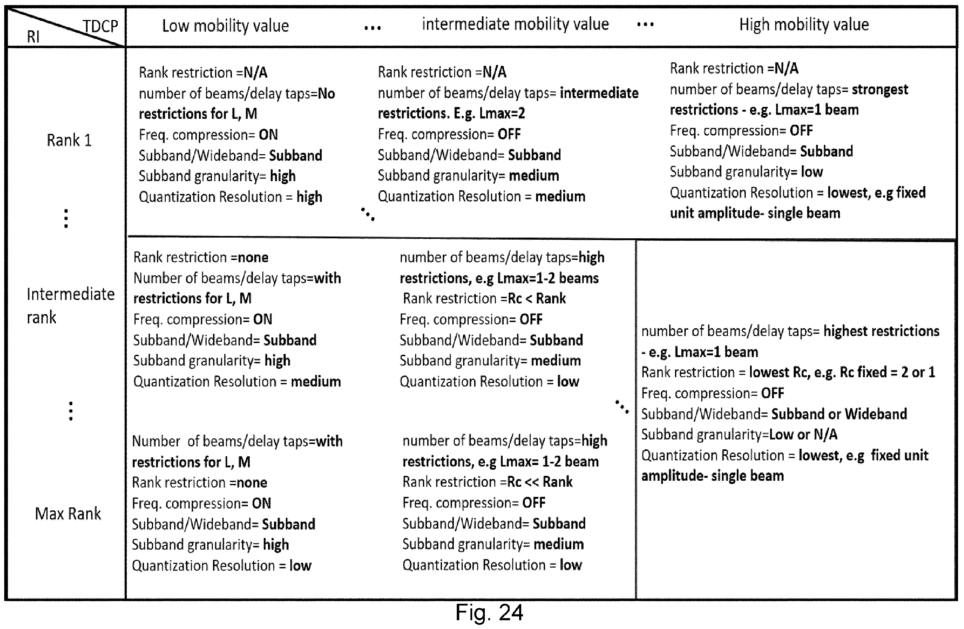

FIG. 24 is a table representing an example of codebook parametrization for a multirank case with RI and TDCP as main configuration selectors.

In detail, in FIG. 24 an example on how this codebook parameter selection could be determined by a set of predefined rules is presented.

Values of the parameters are described qualitatively in order to provide an easier illustration of the concepts.

The two key parameter values are TDCP and RI.

However, TDCP could be alternatively replaced by other type of indicator outside the CSI report, for instance coming from Doppler measurements effectuated with any other type of reference signal (e.g., SRS).

As seen, higher mobility values increase the restrictions on the codebook, i.e., reduced number of beams/delay taps, coarser subband averaging and lower resolution quantization, etc.

At the same time, rank indicator also plays a role also dependent on the mobility conditions which might restrict the rank to a value Rc.

In worst case mobility conditions, Rc could be forced to maximum a couple of streams or even single rank for instance.

In the worst mobility cases, according to example embodiments, the codebook is reconfigured to single beam transmission with very coarse subband or even wideband reporting. Also, quantization is deactivated to the worst case by setting fixed unitary amplitude for the single selected beam.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

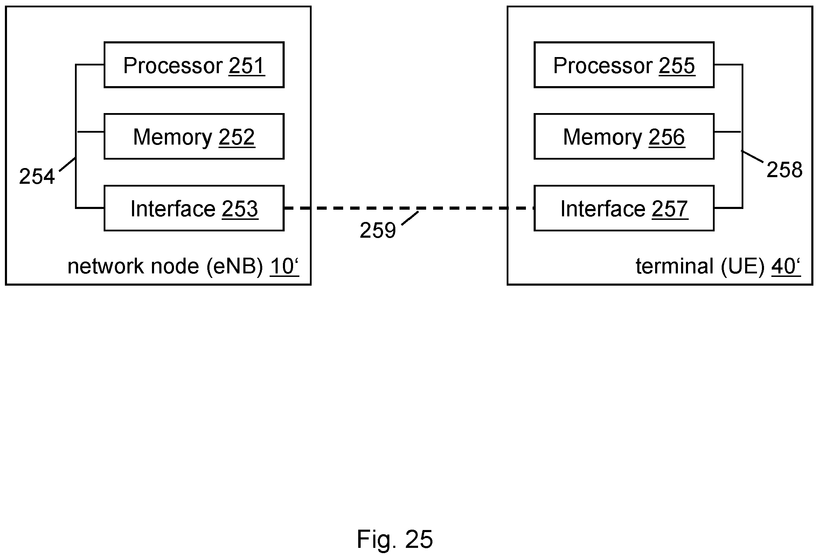

In FIG. 25, an alternative illustration of apparatuses according to example embodiments is depicted. As indicated in FIG. 25, according to example embodiments, the apparatus (access network node or entity) 10' (corresponding to the access network node or entity 10) comprises a processor 251, a memory 252 and an interface 253, which are connected by a bus 254 or the like. Further, according to example embodiments, the apparatus (terminal) 30' (corresponding to the terminal 30) comprises a processor 255, a memory 256 and an interface 257, which are connected by a bus 258 or the like, and the apparatuses may be connected via link 259, respectively.

The processor 251/255 and/or the interface 253/257 may also include a modem or the like to facilitate communication over a (hardwire or wireless) link, respectively. The interface 253/257 may include a suitable transceiver coupled to one or more antennas or communication means for (hardwire or wireless) communications with the linked or connected device(s), respectively. The interface 253/257 is generally configured to communicate with at least one other apparatus, i.e. the interface thereof.

The memory 252/256 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the access network node or entity 10 comprises at least one processor 251, at least one memory 252 including computer program code, and at least one interface 253 configured for communication with at least another apparatus. The processor (i.e. the at least one processor 251, with the at least one memory 252 and the computer program code) is configured to perform receiving, from a terminal, radio channel quality reporting configuration feedback information established based on at least one reference signal (thus the apparatus comprising corresponding means for receiving), to perform generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter (thus the apparatus comprising corresponding means for generating), and to perform transmitting, towards said terminal, information indicative of said modified radio channel quality reporting configuration for said terminal (thus the apparatus comprising corresponding means for transmitting).

According to example embodiments, an apparatus representing the terminal 30comprises at least one processor 255, at least one memory 256 including computer program code, and at least one interface 257 configured for communication with at least another apparatus. The processor (i.e. the at least one processor 255, with the at least one memory 256 and the computer program code) is configured to perform transmitting, towards an access network entity, radio channel quality reporting configuration feedback information established based on at least one reference signal (thus the apparatus comprising corresponding means for transmitting), to perform receiving, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter (thus the apparatus comprising corresponding means for receiving), and to perform determining said modified radio channel quality reporting configuration for said terminal based on said information indicative of said modified radio channel quality reporting configuration for said terminal (thus the apparatus comprising corresponding means for determining).

For further details regarding the operability/functionality of the individual apparatuses, reference is made to the above description in connection with any one of FIGs. 1 to 24, respectively.

For the purpose of the present disclosure as described herein above, it should be noted that

- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;

- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for flexible channel state information configuration. Such measures exemplarily comprise receiving, from a terminal, radio channel quality reporting configuration feedback information established based on at least one reference signal, generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and transmitting, towards said terminal, information indicative of said modified radio channel quality reporting configuration for said terminal.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

At least the following example Items are covered by the above described:

Item 1. A method of an access network entity, the method comprising

receiving, from a terminal, radio channel quality reporting configuration feedback information established based on at least one reference signal,
generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and
transmitting, towards said terminal, information indicative of said modified radio channel quality reporting configuration for said terminal.

Item 2. The method according to Item 1, further comprising

generating said initial radio channel quality reporting configuration for said terminal based on radio channel quality reporting capabilities of said terminal, said initial radio channel quality reporting configuration for said terminal including at least one reporting configuration parameter,
transmitting, towards said terminal, information indicative of said initial radio channel quality reporting configuration for said terminal, and
transmitting said at least one reference signal.

Item 3. The method according to Item 2, further comprising
receiving, from said terminal, information on said radio channel quality reporting capabilities of said terminal.

Item 4. The method according to Item 2 or 3, wherein said radio channel quality reporting capabilities of said terminal include at least one of the following:

space compression support capabilities of said terminal, or
subband/wideband reporting capabilities of said terminal, or
frequency compression support capabilities of said terminal, or
time prediction support capabilities of said terminal, or
time compression support capabilities of said terminal, or
quantization capabilities of said terminal.

Item 5. The method according to any of Items 1 to 4, wherein
said radio channel quality reporting configuration feedback information include at least one of the following:

information included in a channel state information report, or
at least one terminal transmitted reference signal.

Item 6. The method according to Item 5, wherein

said information included in said channel state information report include at least one of the following:

a rank indicator value, or
a set of time domain channel properties values, or
a set of precoding matrix indicators, or
a set of channel quality indicator values.

Item 7. The method according to any of Items 1 to 6, wherein
said information indicative of said modified radio channel quality reporting configuration includes at least one of the following:

information on a rank restriction on a rank indicator, or
information on a type of channel state information calculation, or
information on a number of spatial beams, or
information on a number of delay taps, or
information on a quantization setup of channel state information coefficients, or
information on a wideband or subband reporting setup, or
information on frequency compression activation or deactivation, or
information on channel state information prediction activation or deactivation, or
information on reference signals configuration.

Item 8. The method according to any of Items 1 to 7, wherein

in relation to said generating said modified radio channel quality reporting configuration for said terminal, the method further comprises
referencing to at least one stored table including radio channel quality reporting configuration definitions, and
said information indicative of said modified radio channel quality reporting configuration includes at least one of the following:

a set of indexes to said modified radio channel quality reporting configuration in said at least one stored table, or
said at least one reporting configuration parameter differing from said initial radio channel quality reporting configuration for said terminal.

Item 9. The method according to any of Items 1 to 8, further comprising

receiving, from said terminal, information on at least one suggested reporting configuration parameter to be modified, wherein
in relation to said generating said modified radio channel quality reporting configuration for said terminal, the method further comprises
considering said at least one suggested reporting configuration parameter to be modified upon generation of said modified radio channel quality reporting configuration for said terminal.

Item 10. A method of a terminal, the method comprising

transmitting, towards an access network entity, radio channel quality reporting configuration feedback information established based on at least one reference signal,
receiving, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and
determining said modified radio channel quality reporting configuration for said terminal based on said information indicative of said modified radio channel quality reporting configuration for said terminal.

Item 11. The method according to Item 10, further comprising

receiving, from said access network entity, information indicative of said initial radio channel quality reporting configuration for said terminal, said initial radio channel quality reporting configuration for said terminal including at least one reporting configuration parameter,
receiving said at least one reference signal, and
generating said radio channel quality reporting configuration feedback information based on said at least one reference signal and said initial radio channel quality reporting configuration for said terminal.

Item 12. The method according to Item 10 or 11, further comprising
transmitting, towards said access network entity, information on radio channel quality reporting capabilities of said terminal.

Item 13. The method according to Item 12, wherein
said radio channel quality reporting capabilities of said terminal include at least one of the following:

space compression support capabilities of said terminal, or
subband/wideband reporting capabilities of said terminal, or
frequency compression support capabilities of said terminal, or
time prediction support capabilities of said terminal, or
time compression support capabilities of said terminal, or
quantization capabilities of said terminal.

Item 14. The method according to any of Items 10 to 13, wherein
said radio channel quality reporting configuration feedback information include at least one of the following:

information included in a channel state information report, or
at least one terminal transmitted reference signal.

Item 15. The method according to Item 14, wherein
said information included in said channel state information report include at least one of the following:

a rank indicator value, or
a set of time domain channel properties values, or
a set of precoding matrix indicators, or
a set of channel quality indicator values.

Item 16. The method according to any of Items 10 to 15, wherein
said information indicative of said modified radio channel quality reporting configuration includes at least one of the following:

information on a rank restriction on a rank indicator, or
information on a type of channel state information calculation, or
information on a number of spatial beams, or
information on a number of delay taps, or
information on a quantization setup of channel state information coefficients, or
information on a wideband or subband reporting setup, or
information on frequency compression activation or deactivation, or
information on channel state information prediction activation or deactivation, or
information on reference signals configuration.

Item 17. The method according to any of Items 10 to 16, wherein
said information indicative of said modified radio channel quality reporting configuration includes at least one of the following:

a set of indexes to said modified radio channel quality reporting configuration in at least one stored table including radio channel quality reporting configuration definitions, or
said at least one reporting configuration parameter differing from said initial radio channel quality reporting configuration for said terminal.

Item 18. The method according to any of Items 10 to 17, further comprising

determining, based on an observed radio channel quality behavior, at least one suggested reporting configuration parameter to be modified, and

transmitting, towards said access network entity, information on said at least one suggested reporting configuration parameter to be modified.

Item 19. An apparatus of an access network entity, the apparatus comprising

receiving circuitry configured to receive, from a terminal, radio channel quality reporting configuration feedback information established based on at least one reference signal,

generating circuitry configured to generate a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and

transmitting circuitry configured to transmit, towards said terminal, information indicative of said modified radio channel quality reporting configuration for said terminal.

Item 20. The apparatus according to Item 19, further comprising

generating circuitry configured to generate said initial radio channel quality reporting configuration for said terminal based on radio channel quality reporting capabilities of said terminal, said initial radio channel quality reporting configuration for said terminal including at least one reporting configuration parameter,

transmitting circuitry configured to

transmit, towards said terminal, information indicative of said initial radio channel quality reporting configuration for said terminal, and to

transmit said at least one reference signal.

Item 21. The apparatus according to Item 20, further comprising
receiving circuitry configured to receive, from said terminal, information on said radio channel quality reporting capabilities of said terminal.

Item 22. The apparatus according to Item 20 or 21, wherein
said radio channel quality reporting capabilities of said terminal include at least one of the following:

space compression support capabilities of said terminal, or
subband/wideband reporting capabilities of said terminal, or
frequency compression support capabilities of said terminal, or
time prediction support capabilities of said terminal, or
time compression support capabilities of said terminal, or
quantization capabilities of said terminal.

Item 23. The apparatus according to any of Items 19 to 22, wherein
said radio channel quality reporting configuration feedback information include at least one of the following:

information included in a channel state information report, or
at least one terminal transmitted reference signal.

Item 24. The apparatus according to Item 23, wherein
said information included in said channel state information report include at least one of the following:

a rank indicator value, or
a set of time domain channel properties values, or
a set of precoding matrix indicators, or
a set of channel quality indicator values.

Item 25. The apparatus according to any of Items 19 to 24, wherein
said information indicative of said modified radio channel quality reporting configuration includes at least one of the following:

information on a rank restriction on a rank indicator, or
information on a type of channel state information calculation, or
information on a number of spatial beams, or
information on a number of delay taps, or
information on a quantization setup of channel state information coefficients, or
information on a wideband or subband reporting setup, or
information on frequency compression activation or deactivation, or
information on channel state information prediction activation or deactivation, or
information on reference signals configuration.

Item 26. The apparatus according to any of Items 19 to 25, further comprising

referencing circuitry configured to reference to at least one stored table including radio channel quality reporting configuration definitions, and wherein
said information indicative of said modified radio channel quality reporting configuration includes at least one of the following:

a set of indexes to said modified radio channel quality reporting configuration in said at least one stored table, or
said at least one reporting configuration parameter differing from said initial radio channel quality reporting configuration for said terminal.

Item 27. The apparatus according to any of Items 19 to 26, further comprising

receiving circuitry configured to receive, from said terminal, information on at least one suggested reporting configuration parameter to be modified, and
considering circuitry configured to consider said at least one suggested reporting configuration parameter to be modified upon generation of said modified radio channel quality reporting configuration for said terminal.

Item 28. An apparatus of a terminal, the apparatus comprising

transmitting circuitry configured to transmit, towards an access network entity, radio channel quality reporting configuration feedback information established based on at least one reference signal,
receiving circuitry configured to receive, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and
determining circuitry configured to determine said modified radio channel quality reporting configuration for said terminal based on said information indicative of said modified radio channel quality reporting configuration for said terminal.

Item 29. The apparatus according to Item 28, further comprising

receiving circuitry configured to

receive, from said access network entity, information indicative of said initial radio channel quality reporting configuration for said terminal, said initial radio channel quality reporting configuration for said terminal including at least one reporting configuration parameter, and to
receive said at least one reference signal, and

generating circuitry configured to generate said radio channel quality reporting configuration feedback information based on said at least one reference signal and said initial radio channel quality reporting configuration for said terminal.

Item 30. The apparatus according to Item 28 or 29, further comprising
transmitting circuitry configured to transmit, towards said access network entity, information on radio channel quality reporting capabilities of said terminal.

Item 31. The apparatus according to Item 30, wherein
said radio channel quality reporting capabilities of said terminal include at least one of the following:

space compression support capabilities of said terminal, or
subband/wideband reporting capabilities of said terminal, or
frequency compression support capabilities of said terminal, or
time prediction support capabilities of said terminal, or
time compression support capabilities of said terminal, or
quantization capabilities of said terminal.

Item 32. The apparatus according to any of Items 28 to 31, wherein
said radio channel quality reporting configuration feedback information include at least one of the following:

information included in a channel state information report, or
at least one terminal transmitted reference signal.

Item 33. The apparatus according to Item 32, wherein
said information included in said channel state information report include at least one of the following:

a rank indicator value, or
a set of time domain channel properties values, or
a set of precoding matrix indicators, or
a set of channel quality indicator values.

Item 34. The apparatus according to any of Items 28 to 33, wherein
said information indicative of said modified radio channel quality reporting configuration includes at least one of the following:

information on a rank restriction on a rank indicator, or
information on a type of channel state information calculation, or
information on a number of spatial beams, or
information on a number of delay taps, or
information on a quantization setup of channel state information coefficients, or
information on a wideband or subband reporting setup, or
information on frequency compression activation or deactivation, or
information on channel state information prediction activation or deactivation, or
information on reference signals configuration.

Item 35. The apparatus according to any of Items 28 to 34, wherein
said information indicative of said modified radio channel quality reporting configuration includes at least one of the following:

a set of indexes to said modified radio channel quality reporting configuration in at least one stored table including radio channel quality reporting configuration definitions, or
said at least one reporting configuration parameter differing from said initial radio channel quality reporting configuration for said terminal.

Item 36. The apparatus according to any of Items 28 to 35, further comprising

determining circuitry configured to determine, based on an observed radio channel quality behavior, at least one suggested reporting configuration parameter to be modified, and
transmitting circuitry configured to transmit, towards said access network entity, information on said at least one suggested reporting configuration parameter to be modified.

Item 37. An apparatus of an access network entity, the apparatus comprising

at least one processor, and
at least one memory storing instructions that, when executed by the at least one processor, cause the apparatus at least to perform:
receiving, from a terminal, radio channel quality reporting configuration feedback information established based on at least one reference signal,
generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and
transmitting, towards said terminal, information indicative of said modified radio channel quality reporting configuration for said terminal.

Item 38. The apparatus according to Item 37, wherein

the instructions, when executed by the at least one processor, cause the apparatus at least to perform:
generating said initial radio channel quality reporting configuration for said terminal based on radio channel quality reporting capabilities of said terminal, said initial radio channel quality reporting configuration for said terminal including at least one reporting configuration parameter,
transmitting, towards said terminal, information indicative of said initial radio channel quality reporting configuration for said terminal, and
transmitting said at least one reference signal.

Item 39. The apparatus according to Item 38, wherein

the instructions, when executed by the at least one processor, cause the apparatus at least to perform:
receiving, from said terminal, information on said radio channel quality reporting capabilities of said terminal.

Item 40. The apparatus according to Item 38 or 39, wherein
said radio channel quality reporting capabilities of said terminal include at least one of the following:

space compression support capabilities of said terminal, or
subband/wideband reporting capabilities of said terminal, or
frequency compression support capabilities of said terminal, or
time prediction support capabilities of said terminal, or
time compression support capabilities of said terminal, or
quantization capabilities of said terminal.

Item 41. The apparatus according to any of Items 37 to 40, wherein
said radio channel quality reporting configuration feedback information include at least one of the following:

information included in a channel state information report, or
at least one terminal transmitted reference signal.

Item 42. The apparatus according to Item 41, wherein
said information included in said channel state information report include at least one of the following:

a rank indicator value, or
a set of time domain channel properties values, or
a set of precoding matrix indicators, or
a set of channel quality indicator values.

Item 43. The apparatus according to any of Items 37 to 42, wherein
said information indicative of said modified radio channel quality reporting configuration includes at least one of the following:

information on a rank restriction on a rank indicator, or
information on a type of channel state information calculation, or

information on a number of spatial beams, or
information on a number of delay taps, or
information on a quantization setup of channel state information coefficients, or
information on a wideband or subband reporting setup, or
information on frequency compression activation or deactivation, or
information on channel state information prediction activation or deactivation, or
information on reference signals configuration.

Item 44. The apparatus according to any of Items 37 to 43, wherein

in relation to said generating said modified radio channel quality reporting configuration for said terminal, the instructions, when executed by the at least one processor, cause the apparatus at least to perform:
referencing to at least one stored table including radio channel quality reporting configuration definitions, and said information indicative of said modified radio channel quality reporting configuration includes at least one of the following:

a set of indexes to said modified radio channel quality reporting configuration in said at least one stored table, or
said at least one reporting configuration parameter differing from said initial radio channel quality reporting configuration for said terminal.

Item 45. The apparatus according to any of Items 37 to 44, wherein

the instructions, when executed by the at least one processor, cause the apparatus at least to perform:
receiving, from said terminal, information on at least one suggested reporting configuration parameter to be modified, wherein
in relation to said generating said modified radio channel quality reporting configuration for said terminal, the instructions, when executed by the at least one processor, cause the apparatus at least to perform:
considering said at least one suggested reporting configuration parameter to be modified upon generation of said modified radio channel quality reporting configuration for said terminal.

Item 46. An apparatus of a terminal, the apparatus comprising

at least one processor, and
at least one memory storing instructions that, when executed by the at least one processor, cause the apparatus at least to perform:
transmitting, towards an access network entity, radio channel quality reporting configuration feedback information established based on at least one reference signal,
receiving, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and
determining said modified radio channel quality reporting configuration for said terminal based on said information indicative of said modified radio channel quality reporting configuration for said terminal.

Item 47. The apparatus according to Item 46, wherein

the instructions, when executed by the at least one processor, cause the apparatus at least to perform:
receiving, from said access network entity, information indicative of said initial radio channel quality reporting configuration for said terminal, said initial radio channel quality reporting configuration for said terminal including at least one reporting configuration parameter,
receiving said at least one reference signal, and
generating said radio channel quality reporting configuration feedback information based on said at least one reference signal and said initial radio channel quality reporting configuration for said terminal.

Item 48. The apparatus according to Item 46 or 47, wherein

the instructions, when executed by the at least one processor, cause the apparatus at least to perform:

transmitting, towards said access network entity, information on radio channel quality reporting capabilities of said terminal.

Item 49. The apparatus according to Item 48, wherein
said radio channel quality reporting capabilities of said terminal include at least one of the following:

space compression support capabilities of said terminal, or
subband/wideband reporting capabilities of said terminal, or
frequency compression support capabilities of said terminal, or
time prediction support capabilities of said terminal, or
time compression support capabilities of said terminal, or
quantization capabilities of said terminal.

Item 50. The apparatus according to any of Items 46 to 49, wherein
said radio channel quality reporting configuration feedback information include at least one of the following:

information included in a channel state information report, or
at least one terminal transmitted reference signal.

Item 51. The apparatus according to Item 50, wherein
said information included in said channel state information report include at least one of the following:

a rank indicator value, or
a set of time domain channel properties values, or
a set of precoding matrix indicators, or
a set of channel quality indicator values.

Item 52. The apparatus according to any of Items 46 to 51, wherein
said information indicative of said modified radio channel quality reporting configuration includes at least one of the following:

information on a rank restriction on a rank indicator, or
information on a type of channel state information calculation, or
information on a number of spatial beams, or
information on a number of delay taps, or
information on a quantization setup of channel state information coefficients, or
information on a wideband or subband reporting setup, or
information on frequency compression activation or deactivation, or
information on channel state information prediction activation or deactivation, or
information on reference signals configuration.

Item 53. The apparatus according to any of Items 46 to 52, wherein
said information indicative of said modified radio channel quality reporting configuration includes at least one of the following:

a set of indexes to said modified radio channel quality reporting configuration in at least one stored table including radio channel quality reporting configuration definitions, or
said at least one reporting configuration parameter differing from said initial radio channel quality reporting configuration for said terminal.

Item 54. The apparatus according to any of Items 46 to 53, wherein

the instructions, when executed by the at least one processor, cause the apparatus at least to perform:
determining, based on an observed radio channel quality behavior, at least one suggested reporting configuration parameter to be modified, and
transmitting, towards said access network entity, information on said at least one suggested reporting configuration parameter to be modified.

Item 55. A computer program product comprising computer-executable computer program code which, when the program is run on a computer, is configured to cause the computer to carry out the method according to any one of Items 1 to 9, or 10 to 18.

Item 56. The computer program product according to Item 55, wherein the computer program product comprises a computer-readable medium on which the computer-executable computer program code is stored, and/or wherein the program is directly loadable into an internal memory of the computer or a processor thereof.

List of acronyms and abbreviations

| | |
|---|---|
| 3GPP | Third Generation Partnership Project |
| AI | artificial intelligence |
| AP | aperiodic |
| BS | base station |
| CBSR | codebook subset restriction |
| CJT | cooperative joint transmission |
| CQI | cannel quality indicator |
| CSI | channel state information |
| DFT | Discrete Fourier Transform |
| EVD | Eigenvalue Decomposition |
| gNB | gNodeB |
| LOS | line of sight |
| ML | machine learning |
| MU-MIMO | multiuser multiple input/multiple output |
| NLOS | non line of sight |
| P | periodic |
| PMI | precoding matrix indicator |
| PDP | power delay profile |
| PRB | physical resource block |
| RI | rank indicator |
| RE | resource elements |
| RS | reference signal |
| SP | semipersistent |
| SU-MIMO | single user multiple input/multiple output |
| SVD | singular value decomposition |
| TRS | tracking reference signals |
| TRP | transmission/reception point |
| TDCP | time domain channel properties |
| UE | user equipment |

**Claims**

1. A method of an access network entity, the method comprising

   receiving, from a terminal, radio channel quality reporting configuration feedback information established based on at least one reference signal,
   generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and
   transmitting, towards said terminal, information indicative of said modified radio channel quality reporting configuration for said terminal.

2. The method according to claim 1, further comprising

generating said initial radio channel quality reporting configuration for said terminal based on radio channel quality reporting capabilities of said terminal, said initial radio channel quality reporting configuration for said terminal including at least one reporting configuration parameter,

transmitting, towards said terminal, information indicative of said initial radio channel quality reporting configuration for said terminal, and

transmitting said at least one reference signal.

3. The method according to claim 2, further comprising

receiving, from said terminal, information on said radio channel quality reporting capabilities of said terminal.

4. The method according to claim 2 or 3, wherein

said radio channel quality reporting capabilities of said terminal include at least one of the following:

space compression support capabilities of said terminal, or
subband/wideband reporting capabilities of said terminal, or
frequency compression support capabilities of said terminal, or
time prediction support capabilities of said terminal, or
time compression support capabilities of said terminal, or
quantization capabilities of said terminal.

5. The method according to any of claims 1 to 4, wherein

said radio channel quality reporting configuration feedback information include at least one of the following:

information included in a channel state information report, or
at least one terminal transmitted reference signal.

6. The method according to claim 5, wherein

said information included in said channel state information report include at least one of the following:

a rank indicator value, or
a set of time domain channel properties values, or
a set of precoding matrix indicators, or
a set of channel quality indicator values.

7. The method according to any of claims 1 to 6, wherein

said information indicative of said modified radio channel quality reporting configuration includes at least one of the following:

information on a rank restriction on a rank indicator, or
information on a type of channel state information calculation, or
information on a number of spatial beams, or
information on a number of delay taps, or
information on a quantization setup of channel state information coefficients, or
information on a wideband or subband reporting setup, or
information on frequency compression activation or deactivation, or
information on channel state information prediction activation or deactivation, or
information on reference signals configuration.

8. The method according to any of claims 1 to 7, wherein

in relation to said generating said modified radio channel quality reporting configuration for said terminal, the method further comprises

referencing to at least one stored table including radio channel quality reporting configuration definitions, and

said information indicative of said modified radio channel quality reporting configuration includes at least one of the following:

a set of indexes to said modified radio channel quality reporting configuration in said at least one stored table, or

said at least one reporting configuration parameter differing from said initial radio channel quality reporting configuration for said terminal.

9. The method according to any of claims 1 to 8, further comprising

receiving, from said terminal, information on at least one suggested reporting configuration parameter to be modified, wherein

in relation to said generating said modified radio channel quality reporting configuration for said terminal, the method further comprises

considering said at least one suggested reporting configuration parameter to be modified upon generation of said modified radio channel quality reporting configuration for said terminal.

10. A method of a terminal, the method comprising

transmitting, towards an access network entity, radio channel quality reporting configuration feedback information established based on at least one reference signal,

receiving, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and

determining said modified radio channel quality reporting configuration for said terminal based on said information indicative of said modified radio channel quality reporting configuration for said terminal.

11. The method according to claim 10, further comprising

receiving, from said access network entity, information indicative of said initial radio channel quality reporting configuration for said terminal, said initial radio channel quality reporting configuration for said terminal including at least one reporting configuration parameter,

receiving said at least one reference signal, and

generating said radio channel quality reporting configuration feedback information based on said at least one reference signal and said initial radio channel quality reporting configuration for said terminal.

12. The method according to claim 10 or 11, further comprising

transmitting, towards said access network entity, information on radio channel quality reporting capabilities of said terminal.

13. The method according to claim 12, wherein

said radio channel quality reporting capabilities of said terminal include at least one of the following:

space compression support capabilities of said terminal, or
subband/wideband reporting capabilities of said terminal, or
frequency compression support capabilities of said terminal, or
time prediction support capabilities of said terminal, or
time compression support capabilities of said terminal, or
quantization capabilities of said terminal.

14. The method according to any of claims 10 to 13, wherein

said radio channel quality reporting configuration feedback information include at least one of the following:

information included in a channel state information report, or
at least one terminal transmitted reference signal.

15. The method according to claim 14, wherein

said information included in said channel state information report include at least one of the following:

a rank indicator value, or
a set of time domain channel properties values, or
a set of precoding matrix indicators, or

a set of channel quality indicator values.

16. The method according to any of claims 10 to 15, wherein
said information indicative of said modified radio channel quality reporting configuration includes at least one of the following:

information on a rank restriction on a rank indicator, or
information on a type of channel state information calculation, or
information on a number of spatial beams, or
information on a number of delay taps, or
information on a quantization setup of channel state information coefficients, or
information on a wideband or subband reporting setup, or
information on frequency compression activation or deactivation, or
information on channel state information prediction activation or deactivation, or
information on reference signals configuration.

17. The method according to any of claims 10 to 16, wherein
said information indicative of said modified radio channel quality reporting configuration includes at least one of the following:

a set of indexes to said modified radio channel quality reporting configuration in at least one stored table including radio channel quality reporting configuration definitions, or
said at least one reporting configuration parameter differing from said initial radio channel quality reporting configuration for said terminal.

18. The method according to any of claims 10 to 17, further comprising

determining, based on an observed radio channel quality behavior, at least one suggested reporting configuration parameter to be modified, and
transmitting, towards said access network entity, information on said at least one suggested reporting configuration parameter to be modified.

19. An apparatus of an access network entity, the apparatus comprising

receiving circuitry configured to receive, from a terminal, radio channel quality reporting configuration feedback information established based on at least one reference signal,
generating circuitry configured to generate a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter, and
transmitting circuitry configured to transmit, towards said terminal, information indicative of said modified radio channel quality reporting configuration for said terminal.

20. An apparatus of a terminal, the apparatus comprising

transmitting circuitry configured to transmit, towards an access network entity, radio channel quality reporting configuration feedback information established based on at least one reference signal,
receiving circuitry configured to receive, from said access network entity, information indicative of a modified radio channel quality reporting configuration for said terminal, said modified radio channel quality reporting configuration for said terminal differing from an initial radio channel quality reporting configuration for said terminal in at least one reporting configuration parameter, and
determining circuitry configured to determine said modified radio channel quality reporting configuration for said terminal based on said information indicative of said modified radio channel quality reporting configuration for said terminal.

EP 4 564 694 A1

receiving
circuitry 11

generating
circuitry 12

transmitting
circuitry 13

access network entity
(gNB, mTRP) 10

Fig. 1

access network entity (gNB, mTRP) 10

receiving circuitry 11

generating circuitry 12

transmitting circuitry 13

referencing circuitry 21

considering circuitry 22

Fig. 2

```
┌─────────────────────────────────────┐
│                                     │
│        ┌─────────────────────┐      │
│   ┌───→│     transmitting     │      │
│   │    │    circuitry 31      │      │
│   │    └─────────────────────┘      │
│   │                                  │
│   │    ┌─────────────────────┐      │
│   ├───→│      receiving       │      │
│   │    │    circuitry 32      │      │
│   │    └─────────────────────┘      │
│   │                                  │
│   │    ┌─────────────────────┐      │
│   └───→│     determining      │      │
│        │    circuitry 33      │      │
│        └─────────────────────┘      │
│                                     │
│                  terminal (UE) 30   │
└─────────────────────────────────────┘
```

Fig. 3

Fig. 4

receiving, from a terminal, radio channel quality reporting configuration feedback information established based on at least one reference signal

generating a modified radio channel quality reporting configuration for said terminal based on an initial radio channel quality reporting configuration for said terminal and said radio channel quality reporting configuration feedback information, said modified radio channel quality reporting configuration for said terminal differing from said initial radio channel quality reporting configuration for said terminal in at least one reporting configuration parameter

transmitting, towards said terminal, information indicative of said modified radio channel quality reporting configuration for said terminal

Fig. 5

```
                                                              ┌─ S61
┌──────────────────────────────────────────────────────────┐
│  transmitting, towards an access network entity, radio     │
│  channel quality reporting configuration feedback          │
│  information established based on at least one reference    │
│  signal                                                    │
└──────────────────────────────────────────────────────────┘
                              │
                              ▼                               ┌─ S62
┌──────────────────────────────────────────────────────────┐
│  receiving, from said access network entity, information   │
│  indicative of a modified radio channel quality reporting  │
│  configuration for said terminal, said modified radio      │
│  channel quality reporting configuration for said terminal │
│  differing from an initial radio channel quality reporting │
│  configuration for said terminal in at least one reporting │
│  configuration parameter                                   │
└──────────────────────────────────────────────────────────┘
                              │
                              ▼                               ┌─ S63
┌──────────────────────────────────────────────────────────┐
│  determining said modified radio channel quality reporting │
│  configuration for said terminal based on said information │
│  indicative of said modified radio channel quality         │
│  reporting configuration for said terminal                 │
└──────────────────────────────────────────────────────────┘
```

Fig. 6

**Rel 16 Type II CSI (PMI)**

M delay taps

Rank (RI)

2L beams

**Unquantized Eigenvector based Precoding matrix Tensor**

Freq. sub-bands (N3)

Rank

Antenna ports -gNB (2N1N2)

**Channel matrix Tensor**

Freq. Physical Resource blocks

Number Rx Antennas - UE

Antenna ports -gNB (2N1N2)

Fig. 7

**W1 (SD)-long term**
**L** (2D-DFT beams)

$$W_{R15} = W1W2$$

**W2-short term**

Ncsi/2

**Nsb**

× 2L

Space coeff.
per Sub-band

Rel 15 Type II (space
compression)

$$W_{R16} = W1W2(W_f)^H$$

**W1 (SD)**     **W2**     **Wf (FD)**

Ncsi/2     **M**     **Nsb (N3)**

×2L     ×     M

Frequency to time
delay DFT vectors

Rel 16 Enh. Type II (space-frequency
compression)

Fig. 8

**Rel 15 Type I – mode 2**

$$\boldsymbol{B} = [B_0, B_1, B_2, B_3]$$

$$W1 = \begin{bmatrix} \boldsymbol{B} & 0 \\ 0 & \boldsymbol{B} \end{bmatrix} \quad W2 = \begin{bmatrix} b_0 \\ b_1 \\ b_2 \\ b_3 \\ \varphi_n b_0 \\ \varphi_n b_1 \\ \varphi_n b_2 \\ \varphi_n b_3 \end{bmatrix}$$

$$b_i \in [0,1]$$

$$\cdots \rightarrow B_i$$

$$W = W1W2 = \begin{bmatrix} B_i \\ \varphi_n B_i \end{bmatrix}$$

**Rel 15/16 Type II (space compression)**

$$\boldsymbol{B} = [B_0, B_1, B_2, B_3]$$

$$W1 = \begin{bmatrix} \boldsymbol{B} & 0 \\ 0 & \boldsymbol{B} \end{bmatrix} \quad W2 = \begin{bmatrix} b_{0,0} \\ b_{1,0} \\ b_{2,0} \\ b_{3,0} \\ b_{0,1} \\ b_{1,1} \\ b_{2,1} \\ b_{3,1} \end{bmatrix}$$

$$pol \in [0,1]$$

$$b_{i,pol} \in \mathbb{C} \wedge |b_{i,pol}| \leq 1$$

$$\cdots \rightarrow B_i$$

$$W = W1W2 = \begin{bmatrix} \sum_{i=0}^{L-1} b_{i,0} B_i & 0 \\ 0 & \sum_{i=0}^{L-1} b_{i,1} B_i \end{bmatrix}$$

Fig. 9

B: Num time samples

N: Num Subbands/Time delay taps

$h_n(k)$

$l \rightarrow$ lags (signal shifting)

time

t-B-1  ...  t-i  ...  t-1  t

TRS signals

Fig. 10

EP 4 564 694 A1

Fig. 11

**Unified CSI Feedback Codebook-
based Reporting Process**

Range of configurable
parameters for type A

Range of configurable
parameters for type B

. . .

CSI feedback
Codebook based
reporting-type A

CSI feedback
Codebook based
reporting- type B

. . .

EP 4 564 694 A1

Fig. 12

**Reconfigurable CSI codebook-based reporting process**

User Equipment

Network Entity

Fig. 13

EP 4 564 694 A1

Fig. 14

CSI Reconfiguration Index

Selection function

$P(y\_1)$ $P(y\_2)$ $P(y\_3)$ $P(y\_4)$ ... $P(y\_\Omega)$

Output function

...

Output Layer

Hidden Layer Nh

Hidden Layer 1

Input Layer

PMI

CQI

...

RI

TDCP

AUX INFO (OPTIONAL)

CSI Report Input

Fig. 15

Fig. 16

Cosine similarity for different reported CSI layers (CSI period 20ms, Speed 3km/h) vs. instantaneous ideal CSI

Fig. 17a

EP 4 564 694 A1

Cosine Similarity for Different reported CSI layers (CSI period 20ms, Speed 10km/h) vs. instantaneous ideal CSI

Fig. 17b

EP 4 564 694 A1

Fig. 18a

EP 4 564 694 A1

Fig. 18b

Space Compression Only

Fig. 19a

Fig. 19b

The rank restriction **Rc** is already fixed, and a number of beams L and M delay taps and/or subband/wideband reporting were initially configured for a given **TDCP** value.

-A second fine tuning on the values for L and M and also the configuration of the sub-band and wide-band. If beam or delay taps are under quantization thresholds can be further removed, thus L'<L and M'<M).

CSI-RS + TRS

PMI +CQI + RI +TDCP

New codebook configuration (L', M', SB/WB)

CSI-RS + TRS

UE is the only one capable to notice if some parameter value needs to be increased as it has direct access to the CSI-RS measurement.

Therefore, UE could request to increase the number of beams or delay taps L">L' or M">M' or switch ON/OFF subband reporting.

Nonetheless UE cannot send this suggestion if it is not mapped to the corresponding RI/TDCP operational point codebook configuration

PMI +CQI +TDCP (using new configuration from network)

⋮

CSI-RS + TRS

PMI +CQI +TDCP/RI (**optional**: including new suggested configuration from UE in the limits of specific TDCP/RI, RI could be > Rc)

The network might accept the request to increase the number of beams L" and M" or switch ON/OFF subband reporting. However, the values cannot be increased higher than the allowed values depending on the rank restriction Rc and TDCP values depending on standardized rules or tables.

Likewise, the network could update the configuration only based on RI/TDCP knowledge without any UE suggestion.

Fig. 20

Fig. 21

**Maximizing throughput with Bit Overhead Minimization**

Fig. 22

EP 4 564 694 A1

Fig. 23

| RI \ TDCP | Low mobility value ... | intermediate mobility value ... | High mobility value |
|---|---|---|---|
| Rank 1 ⋮ | Rank restriction =N/A<br>number of beams/delay taps=**No restrictions for L, M**<br>Freq. compression= **ON**<br>Subband/Wideband= **Subband**<br>Subband granularity= **high**<br>Quantization Resolution = **high** | Rank restriction =N/A<br>number of beams/delay taps= **intermediate restrictions. E.g. Lmax=2**<br>Freq. compression= **OFF**<br>Subband/Wideband= **Subband**<br>Subband granularity= **medium**<br>Quantization Resolution = **medium** | Rank restriction =N/A<br>number of beams/delay taps= **strongest restrictions - e.g. Lmax=1 beam**<br>Freq. compression= **OFF**<br>Subband/Wideband= **Subband**<br>Subband granularity= **low**<br>Quantization Resolution = **lowest, e.g fixed unit amplitude- single beam** |
| Intermediate rank ⋮ | Rank restriction =**none**<br>Number of beams/delay taps=**with restrictions for L, M**<br>Freq. compression= **ON**<br>Subband/Wideband= **Subband**<br>Subband granularity= **high**<br>Quantization Resolution = **medium** | number of beams/delay taps=**high restrictions, e.g Lmax=1-2 beams**<br>Rank restriction =**Rc < Rank**<br>Freq. compression= **OFF**<br>Subband/Wideband= **Subband**<br>Subband granularity= **medium**<br>Quantization Resolution = **low** | number of beams/delay taps= **highest restrictions - e.g. Lmax=1 beam**<br>Rank restriction = **lowest Rc, e.g. Rc fixed = 2 or 1**<br>Freq. compression= **OFF**<br>Subband/Wideband= **Subband or Wideband**<br>Subband granularity=**Low or N/A**<br>Quantization Resolution = **lowest, e.g fixed unit amplitude- single beam** |
| Max Rank | Number of beams/delay taps=**with restrictions for L, M**<br>Rank restriction =**none**<br>Freq. compression= **ON**<br>Subband/Wideband= **Subband**<br>Subband granularity= **high**<br>Quantization Resolution = **low** | number of beams/delay taps=**high restrictions, e.g Lmax= 1-2 beam**<br>Rank restriction =**Rc << Rank**<br>Freq. compression= **OFF**<br>Subband/Wideband= **Subband**<br>Subband granularity= **medium**<br>Quantization Resolution = **low** | |

Fig. 24

EP 4 564 694 A1

EP 4 564 694 A1

Fig. 25

# EUROPEAN SEARCH REPORT

**Application Number**

EP 23 21 3804

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/321189 A1 (WEI CHAO [CN] ET AL) 6 October 2022 (2022-10-06) <br> * paragraph [0083] – paragraph [0092] * <br> * paragraph [0107] – paragraph [0109] * <br> * paragraph [0124] – paragraph [0137] * <br> * paragraph [0197] – paragraph [0199] * <br> * figures 2-8, 9, 10, 12 * <br> ----- | 1-20 | INV. H04B7/06 |

**TECHNICAL FIELDS SEARCHED (IPC)**

H04B

The present search report has been drawn up for all claims

| Place of search | Date of completion of the search | Examiner |
|---|---|---|
| Munich | 10 May 2024 | Spinnler, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 3804

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2024

| Patent document cited in search report | Publication date | Patent family member(s) | Publication date |
|---|---|---|---|
| US 2022321189 A1 | 06-10-2022 | CN 114270924 A | 01-04-2022 |
| | | EP 4022961 A1 | 06-07-2022 |
| | | US 2022321189 A1 | 06-10-2022 |
| | | WO 2021035666 A1 | 04-03-2021 |

EPO FORM P0459

For more details about this annex : see Official Journal of the European Patent Office, No. 12/82